# EUROPÄISCHE PATENTSCHRIFT

(11) **EP 4 271 236 B1**
(45) Veröffentlichungstag und Bekanntmachung des Hinweises auf die Patenterteilung: **05.06.2024**
(21) Anmeldenummer: 22700611.1
(22) Anmeldetag: 13.01.2022
(51) Int. Cl.: A47J 37/06, A47J 37/07

(54) **SCHRÄGGRILLROST UND TROCKENGARGERÄT MIT SCHRÄGGRILLROST**
SLOPING GRILL GRATE AND DRY COOKING APPLIANCE WITH SLOPING GRILL GRATE
GRIL INCLINÉ ET APPAREIL DE CUISSON À SEC AVEC GRIL INCLINÉ

(30) Priorität: 15.01.2021 DE 102021200341
(43) Veröffentlichungstag der Anmeldung: 08.11.2023
(73) Patentinhaber: Zhang, Jiulai, 6600 Reutte (AT)
(72) Erfinder: Zhang, Jiulai, 6600 Reutte (AT)
(74) Vertreter: Isarpatent
(86) Internationale Anmeldenummer: PCT/EP2022/050598
(87) Internationale Veröffentlichungsnummer: WO 2022/152776

(56) Entgegenhaltungen:
- EP-A1- 0 353 642
- DE-A1- 3 029 409
- DE-A1-102017 125 414
- IT-A1- VI20 110 010
- KR-A- 20160 057 621
- US-A1- 2013 112 088
- US-A1- 2017 150 847

## Beschreibung

### TECHNISCHES GEBIET DER ERFINDUNG

Die Erfindung betrifft einen Schräggrillrost mit verbesserter Fettablauffunktion und ein Trockengargerät, wie etwa einen Backofen oder einen Grill, mit einem derartigen Schräggrillrost.

### TECHNISCHER HINTERGRUND

Grillen als Form der Lebensmittelzubereitung ist eine auf direkter oder indirekter Wärmeeinstrahlung beruhende Trockengartechnik. Hierzu wird Gargut für eine bestimmte Gardauer über oder unter eine Hitzequelle oder auch zwischen zwei Hitzequellen platziert, um durch starke Erhitzung vor allem an der Oberfläche des Garguts nicht-enzymatische Bräunungsreaktionen und/oder Röstreaktionen hervorzurufen. Für die Realisierung einer Hitzequelle kommen angefeuerte oder angeglühte karbonbasierte Energieträger wie etwa Holz, Holzpellets, Holzkohle, Kohlebriketts oder Torf, in Brand gesetztes Gas, durch Gas erhitzte Steine oder auch mit Hilfe von elektrischem Strom erwärmte leitfähige Heizelemente in Frage. Zur Platzierung des Garguts (oder auch Grillguts) sind Haltevorrichtungen notwendig: Neben Grillplatten und Spießen wie etwa Drehspießen, Schaschlikspießen oder Brochettes, auf die das Grillgut aufgesteckt wird, kommen häufig Grillroste zum Einsatz, auf die das Grillgut aufgelegt wird.

Insbesondere bei mit Holzkohle befeuerten Grills können gesundheitsschädliche Stoffe aus der Glut und eventuell aus in die Glut hineingetropftem Fett ins Grillgut übergehen. Die entstehenden polyzyklischen aromatischen Kohlenwasserstoffe wie Benzopyren gelten als krebserregend. Weiterhin erschwert die Feuerbildung das Grillen. Bei mit Gas oder Strom beheizten Trockengargeräten bestehen grundsätzlich ähnliche Probleme.

Im Stand der Technik gibt es für Grillroste unterschiedliche Lösungsansätze, beispielsweise das Vorsehen seitlicher oder indirekter Heizungen, sowie die Ergänzung von Rinnen/Rillen unterhalb der Roststäbe. Relevante Schriften diesbezüglich sind EP 1 631 178 A1, WO 2004/107942 A1, US 3,369,481 A, US 3,664,256 A, US 3,719,507 A, DE 391 98 18 A1, DE 298 10 644 U1, DE 296 08 205 U1, DE 200 12 058 U1, DE 103 26 271 A1, DE 199 03 448 A1, DE 20 2005 006 982 U1 und DE 362 01 03 A1.

Seitliche oder indirekte Heizquellen erschweren jedoch die Handhabung sehr stark. Bei indirekter Heizung ist zudem stets ein Deckel erforderlich und die Garzeit beträgt länger. Des Weiteren ist der Nutzer in der Wahl der Gartechnik beschränkt.

Ein Ersetzen der Rundstäbe durch z. B. V-Profile mit einer leichten Neigung, wie z. B. in DE 792 30 24 U1, DE 24 27 678 A1 oder DE 10 2016 211 871 A1 beschrieben, führt nicht den gewünschten Effekt herbei. Die Flüssigkeit aus dem Grillgut, welches zwischen den Profilen liegt, fließt nicht in die Rillen, sondern entlang der Außenoberfläche zur Unterseite der Profile und tropft von dort in die Glut. Deshalb ist eine zweite Rinne/Rille unter jedem Profil, wie in WO 2005/112719 A1 beschrieben, erforderlich. Jedoch beschränkt die relativ komplizierte Bauweise eine breite Anwendung.

Die DE 20 2009 014 563 U1 und die KR 20-0461125 Y1 offenbaren jeweils einen Grillrost mit gegenüber der Horizontalen schräg verlaufenden Roststangen, die integral ausgebildete Fettablaufrinnen aufweisen. Die DE 100 33 294 A1 offenbart ebene Grillroste mit Auflageelementen, welche an ihrer Unterseite gekrümmte Ablaufschienen für Fett aufweisen.

Grillroste mit solchen Rinnen oder Ablaufschienen haben insbesondere den Nachteil, dass die zum Grillgut geführte Wärmeeinstrahlung durch die Rinnen stark reduziert ist und dass sich die Rinnen- oder Ablaufelemente nach dem Grillen nur schwer reinigen lassen.

Es hat sich wie in DE 299 03 212 U1 sowie DE 100 33 294 A1 beschrieben als vorteilhaft erwiesen, dass das Fett entlang der Unterseite des Rostes abfließen kann, wenn der Rost ein Gefälle aufweist. Dies beruht auf dem Prinzip der Benetzungskraft zwischen dem Fett und dem Rost. Die DE 299 03 212 U1 offenbart einen Grill mit einem geneigten Grillkörper, wobei auch Lösungen mit Gelenk beansprucht werden. Diese Lösungen sind kompliziert und bedingen hohe Kosten bei der Fertigung. Die Offenlegungsschrift DE 100 33 294 A1 beschreibt einen Rost mit einer Ummantelung für jeden Stab des Rostes. Diese Konstruktion ist ebenfalls kostenintensiv. Im Übrigen ist bei dieser Bauweise ein rauchfreies Grillen nicht gewährleistet, wenn die Mantelblechdicke nicht ausreichend groß genug ist, um eine ausreichende Benetzungskraft zu gewährleisten.

Die DE 240 22 54 A1 offenbart einen tropffreien Grillrost. Außer parallelen Längsstäben sind noch Querstäbe vorhanden, so dass ein netzartiger Rost gebildet wird. Solche Grillroste sind jedoch komplizierter und teurer herzustellen und weisen ein erhöhtes Gewicht auf, was das Einbringen des Rostes auf einen Grillkörper erschwert.

Die DE 197 169 72 A1 offenbart einen Grill, der eine Fettsammelneigung und eine Fetttransportneigung aufweist. Die EP 0 353 642 A1 offenbart eine Vorrichtung zum Grillieren von Nahrungsmitteln, deren Grillrost zusammengesetzte Trägerstäbe aufweist.

Die Offenlegungsschrift DE 10 2010 039 695 A1 offenbart schräge Grillroste, welche Adhäsionskräfte ausnutzen, um ein rauchfreies Grillen zu ermöglichen. Diese Technologie bietet Anpassungslösungen eines schrägen Grillrostes für herkömmliche Grills wie z. B. Kugelgrills, Rundgrills, Säulengrills, Trichtergrills, Grillwagen, Schwenkgrills, Feuerstellen, Gartengrillkamine, usw. Für eine Nachrüstung von bestehenden Grills muss für jedes Modell jedoch ein entsprechender Grillrost konstruiert werden.

Die DE 10 2011 089 663 B4 offenbart einen universal einsetzbaren Grillaufsatz, der aus Rundstäben gefertigt ist und dessen Grillfläche gegen die Horizontale geneigt ist. Der Grillaufsatz passt zu jedem Grilltyp und ermöglicht aufgrund der Neigung der Grillfläche einen raucharmen Grillvorgang.

Das Prinzip, überschüssiges Fett im Zusammenspiel aus Schwerkraft und Adhäsionskräften zwischen Fett und Roststäben in eine Fettwanne abzutransportieren, wie in DE 299 03 212 U1, DE 100 33 294 A1, DE 240 22 54 A1, DE 197 169 72 A1, DE 10 2010 039 695 A1 und DE 10 2011 089 663 B4 offenbart, hat allerdings physikalische Grenzen. Beim Grillen von sehr fettigem Grillgut oder von Grillgut mit viel Marinade oder auch beim Grillen unter sehr starker Hitzeeinwirkung kann es passieren, dass die schrägen Roststäbe die großen Mengen an Öl und Fett nicht mehr abtransportieren können. Ein Fettbrand ist dadurch nicht mehr kontrollierbar. Ferner wird auch unter günstigen Grillbedingungen die rauchreduzierende Wirkung der Grillrostkonstruktion mit zunehmender Grilldauer schlechter. Zudem tritt aus Fleisch als Grillgut nicht nur Fett aus, sondern auch Fleischsaft, insbesondere wenn das Grillgut nicht lange auf dem Grillrost liegt. Dieser Saft trocknet aufgrund der Wärmeeinstrahlung an der Unterseite der Roststäbe und bildet nach und nach Ablagerungen, die wiederum potentielle Tropfstellen für Fett sein können.

### ZUSAMMENFASSUNG DER ERFINDUNG

Eine der Aufgaben der Erfindung besteht daher darin, einen Schräggrillrost für Trockengargeräte, wie beispielsweise Grills oder Backöfen mit Grillfunktion, zu finden, dessen Fetttransporteigenschaften verbessert sind und auch bei länger andauernder Grilltätigkeit oder unter starker Hitzeeinwirkung durch die verwendete Hitzequelle des Trockengargerätes nicht nachlassen.

Diese und andere Aufgaben werden durch einen Schräggrillrost mit den Merkmalen des Anspruchs 1 sowie durch ein Trockengargerät mit den Merkmalen des Anspruchs 14 gelöst.

Gemäß einem ersten Aspekt der Erfindung umfasst ein Schräggrillrost eine Anzahl von in Abstand zueinander stehenden Grillgutauflageelementen. Mindestens 70% der Grillgutauflageelemente sind jeweils aus mindestens zwei Trägerstäben zusammengesetzt. Diese Trägerstäbe weisen keine Fettrinne auf. Bei jedem der mindestens 70% der Grillgutauflageelemente ist einer der Trägerstäbe um weniger als 1 mm von mindestens einem der anderen Trägerstäbe des jeweiligen Grillgutauflageelements beabstandet, und kann bevorzugt in Kontakt mit mindestens einem der anderen Trägerstäbe stehen. Im Grillbetrieb des Schräggrillrosts verlaufen mindestens zwei Trägerstäbe eines Grillgutauflageelements unter Neigungswinkeln zwischen 1° und 30° entlang ihrer Längserstreckung gegenüber der Horizontalen.

Die Trägerstäbe können gerade, kurvig oder spiralförmig sein. Die kurvigen Trägerstäbe verlaufen 2-dimensional in einer Ebene und die spiralförmigen Trägerstäbe verlaufen 3-dimensional. Ein Grillgutauflageelement kann entweder nur eine Variante oder mehrere Varianten aufweisen. Das heißt, die Trägerstäbe können in manchen Ausführungsformen alle gerade, alle kurvig oder alle spiralförmig sein. In anderen Ausführungsformen kann ein Grillgutauflageelement einen gerade verlaufenden, im Querschnitt runden Trägerstab, das heißt einen Rundstab, und mehrere spiralförmige Trägerstäbe, die helikal um den Rundstab herum verlaufen, aufweisen. Wenn die Abstände zwischen den Trägerstäben gering genug sind, können alle Varianten vorteilhafte erfindungsgemäße technische Effekte erzielen.

Die Trägerstäbe in einem Grillgutauflageelement können gleich lang sein. In manchen Ausführungsformen können unterschiedliche Längen vorteilhaft sein, beispielsweise wenn ein Grillgutauflageelement aus zwei Trapezleistenprofilen aus Gusseisen und einem Rundstab besteht, soll der Rundstab geringfügig kürzer sein als die Trapezleistenprofile. Dadurch können die sich als günstig erweisenden geringen Abstände zwischen den Trägerstäben leichter realisiert werden.

Die Trägerstäbe in einem Grillgutauflageelement können in manchen Ausführungsformen parallel zueinander stehen. Das gewährleistet konstante geringe Abstände zwischen den Trägerstäben über die Erstreckung des gesamten Grillgutauflageelements hinweg. In anderen Ausführungsformen kann ein Grillgutauflageelement einen geraden Rundstab und z.B. zwei spiralförmige Rundstäbe aufweisen.

Prinzipiell können alle Grillgutauflageelemente eines Schräggrillrostes aus zwei oder mehr Trägerstäben bestehen. Um die Konstruktion zu vereinfachen, können in manchen Ausführungsformen zwei seitlich liegende und ggf. noch weitere Grillgutauflageelemente jeweils aus einem einzelnen Trägerstab gefertigt werden. Wenn weniger als 70% der Grillgutauflageelemente eines Schräggrillrostes aus zwei oder mehr Trägerstäben bestehen, das heißt, wenn mehr als 30% der Grillgutauflageelementejeweils aus einem einzelnen Stab gefertigt sind, ist die erwünschte rauchreduzierende Auswirkung nicht so ausgeprägt.

Erfindungsgemäß weisen die Trägerstäbe der Grillgutauflageelemente keine Fettrinne auf. Eine Fettrinne ist ein Profil mit mindestens einer nach oben gerichteten Öffnung, dessen Verhältnis zwischen Öffnungsbreite b und Profilbreite B normalerweise größer als ungefähr 50% ist. Bei einer Neigung kann eine Flüssigkeit in der Fettrinne vom höheren Ende zu dem niedrigen Ende fließen, weil die zwei oberen Ränder der Öffnung das Überlaufen der Flüssigkeit verhindern. Rinnen mit nach oben gerichteter Öffnung, die durch die Begrenzung der oberen Ränder der Öffnung zum Fettabtransport geeignet ist, können als Fettrinne betrachtet werden. Fettrinnen schirmen in der Regel Hitzestrahlung ab und erschweren die Reinigung. Zu unterscheiden von Fettrinnen sind Rillen, die für den Transport von Fett durch die Begrenzung der oberen Ränder der Öffnung eine untergeordnete Rolle spielen, weil das Fett entweder wegen zu kleiner Rillenabmessungen sofort übertritt oder die Rillen keine Öffnung nach oben aufweisen. Das Verhältnis b/B bei Rillen ist deutlich kleiner als 50%, und kann in manchen Ausführungsformen Null betragen, da keine der durch die Rillen gebildeten Öffnung nach oben gerichtet ist.

Der Abstand zwischen den Trägerstäben eines Grillgutauflageelementes soll kleiner als 1 mm, bevorzugt kleiner als 0,5 mm sein. Wenn der Abstand gleich null ist, das heißt die Trägerstäbe mit ihrer Außenfläche aneinandergrenzen, kann die Fertigung einfach sein, der gewünschte Kapillar-Effekt gewährleistet werden und das Grillgut maximale Wärmeleitung von den Trägerstäben erhalten. Dabei kann das Fett aufgrund der üblicherweise vorhandenen Rauigkeit der Trägerstaboberflächen auch problemlos durch die somit vorhandenen kleinen Durchtrittsstellen zwischen zwei Trägerstäben fließen. Das heißt, die zwei aneinander grenzenden Trägerstäbe bilden keine fluiddichte Barriere. Bei ausreichend kleinem Abstand zwischen den Trägerstäben entsteht ein Kapillareffekt zwischen benachbarten Trägerstäben, der dafür sorgt, dass sich Kapillarmenisken ausbilden, in denen große Mengen an Flüssigkeit, die viel größer sind als die Menge, die durch zwei einzelne Stäben abtransportiert werden kann, transportiert werden können, ohne dass die Flüssigkeit von den Auflageelementen nach unten abtropft. Bei Abständen von mehr als 1 mm zwischen den Trägerstäben wird die gleichzeitige Benetzung durch Flüssigkeit erschwert, so dass die Schwerkraft gegenüber dem Kapillareffekt dominiert. Die Fetttransportfähigkeit wäre dann nicht anders als bei einem Schräggrillrost nach dem Stand der Technik.

Bei einer Neigung der Trägerstäbe eines Grillgutauflageelements im Grillbetrieb des Schräggrillrosts gegenüber der Horizontalen kann beim Grillen auftretende Flüssigkeit wie Fett und Fleischsaft durch das Zusammenspiel zwischen Schwerkraft und Adhäsionskräften an den Trägerstäben des Auflageelements sicher entlang den Trägerstäben abfließen, ohne vorher abzutropfen. Je größer die Neigung, desto besser ist die rauchreduzierende Auswirkung. Aber eine große Neigung bedeutet mehr Hitze-Ungleichmäßigkeit für das Grillgut. Die Neigung der Trägerstäbe im Grillbetrieb soll 1°- 30° gegenüber der Horizontalen, bevorzugt 3° - 15°, noch bevorzugt 5° -10° aufweisen. Mit einem Schräggrillrost nach der Erfindung ist eine relative niedrigere Neigung ausreichend für eine rauchreduzierende Auswirkung gegenüber einem Schräggrillrost nach dem Stand der Technik mit vereinzelten Trägerstäben.

Die geraden Trägerstäbe weisen einen konstanten Neigungswinkel in Grillbetrieb auf. Bei 2-dimensional kurvigen Trägerstäben gibt es keinen konstanten Neigungswinkel. Die ortsabhängige Neigung entlang der Längserstreckung variiert dabei um eine mittlere Neigung. Deshalb verlaufen die Trägerstäbe eines Grillgutauflageelements im Grillbetrieb des Schräggrillrosts entlang der Längserstreckung variierenden Neigungswinkeln zwischen 1° und 30° gegenüber der Horizontalen. Bei spiralförmigen Trägerstäben variiert der Neigungswinkel ebenfalls entlang der Längserstreckung. Bei aus drei oder mehr spiralförmigen Trägerstäben bestehenden Grillgutauflageelementen bildet sich ein gerader Mittenkanal, dessen Längsachse gleich der Längsachse der spiralförmigen Stäbe ist. Bei einer Neigung des Mittenkanals um 1° bis 30° fließt das Fett aufgrund des Zusammenspiels von Adhäsions- und Schwerkraft, entlang der Trägerstäben zu einem Fettauffangbehälter. Hier ist die Neigung der Längsachse der spiralförmigen Stäbe, anstelle der Neigungen der einzelnen spiralförmigen Stäbe, für die Effektivität des Fettabtransports entscheidend. Bei Grillgutauflageelementen bestehend aus einem geraden Rundstab und einer Mehrzahl umlaufender spiralförmiger Stäbe wird der Kapillareffekt des Mittenkanals durch den Rundstab noch verstärkt. Bei einer Neigung des Rundstabs um 1° bis 30° fließt das Fett entlang der Trägerstäbe zu Fettauffangbehältern. Hier ist wieder die Neigung der Längsachse der spiralförmigen Stäbe, die gleich der Neigung des Rundstabs ist, anstelle von den Neigungen der einzelnen spiralförmigen Stäbe, für den Fettabtransport entscheidend. Deshalb wird die Neigung der Längsachse der spiralförmigen Trägerstäbe als die Neigung der spiralförmigen Trägerstäbe definiert. Das heißt, die spiralförmigen Trägerstäbe eines Grillgutauflageelementes sollen bei Grillbetrieb eines Schräggrillrostes unter einem Neigungswinkel von 1° - 30° verlaufen.

Dass mindestens einer der Trägerstäbe um weniger als 1 mm von mindestens einem der jeweils anderen Trägerstäbe beabstandet ist bedeutet, dass bei z.B. drei Trägerstäben in einem Grillgutauflageelement nur einer der Trägerstäbe um weniger als 1 mm von nur einem Trägerstab beabstandet sein kann. Der dritte Trägerstab kann mehr als 1 mm von anderen zwei Trägerstäben beabstandet sein. Dass im Grillbetrieb des Schräggrillrosts mindestens zwei Trägerstäbe eines Grillgutauflageelements unter Neigungswinkeln zwischen 1° und 30° entlang ihrer Längserstreckung gegenüber der Horizontalen verlaufen bedeutet, dass bei z.B. drei Trägerstäben in einem Grillgutauflageelement nur zwei Trägerstäbe gegen die Horizontale um 1° - 30° geneigt sein können. Der dritte Trägerstab kann beispielsweise in horizontaler Richtung, das heißt ohne Neigung, verlaufen. Die obengenannten beiden Fälle treffen zu, wenn beispielsweise in einem Grillgutauflageelement ein horizontal verlaufender Trägerstab sich oberhalb zwei gegenüber der Horizontalen um 1° - 30° geneigten zwei Trägerstäben befinden, deren Abstand voneinander kleiner als 1 mm ist. Das Fett aus dem Grillgut kann dann von dem oberen Trägerstab auf die unteren zwei schräg verlaufenden Trägerstäbe tropfen, die das Fett zu dem Fettauffangbehälter transportieren. Die Ablagerungen, die sich am oberen Trägerstab bilden, stören dabei nicht. Sämtliches Grillgut wird gleichmäßig erhitzt, da es auf der Grillgutauflagefläche keinen Höhenunterschied mehr gibt.

Schräggrillroste können dabei Anordnungen von hitzebeständigen, insbesondere metallischen, Grillgutauflageelemente aufweisen, deren Flächenbedeckung in der Rostebene normalerweise geringer ist als die zwischen den einzelnen Grillgutauflageelementen bestehenden Zwischenräume. Kleinere Zwischenräume können vorteilhaft sein, wenn kleinstückiges Grillgut gegrillt wird. Zu diesem Zweck kann zusätzlich eine netzförmige Unterlage auf dem Schräggrillrost benutzt werden. Solche Unterlagen beeinflussen den technischen Effekt des erfindungsgemäßen Schräggrillrostes nicht.

Schräggrillroste können rechteckig, rund, oval, trapezförmig, achteckig, sechzehneckig, dreieckig, fünfeckig, halbkreisförmig, oder von jeder anderen Form sein. Der Schräggrillrost kann in manchen Ausführungsformen einen Grillrostrahmen aufweisen, in welchen die Grillgutauflageelemente eingesetzt sind. Grillrostrahmen können auch in den Grillkörper integriert werden. Das heißt, die Grillgutauflageelemente werden in vorgesehenen Öffnungen im Grillkörper eingesteckt.

Gemäß einem zweiten Aspekt der Erfindung umfasst ein Trockengargerät, insbesondere ein Backofen oder ein Kugelgrill, Rundgrill, Säulengrill, Trichtergrill, Schwenkgrill, Gartengrill, Grillwagen, Tischgrill, Campinggrill, Grillstation oder Grillkamin, einen Garraum sowie mindestens einen in dem Garraum angeordneten Schräggrillrost gemäß dem ersten Aspekt der Erfindung. Hitzequellen für das Trockengargerät können Holzkohle, Holzkohlebriketts, Holz, Holzpellets, Gas oder Strom sein.

Eine der wesentlichen Ideen der Erfindung besteht darin, einen Schräggrillrost mit mehreren Auflageelementen für Grillgut auszustatten, die ihrerseits jeweils wiederum aus mindestens zwei Trägerstäben bestehen. Dabei sind die mindestens zwei Trägerstäbe in engem Abstand bzw. direkt nebeneinander angeordnet, während die Auflageelemente selbst weiter voneinander, z.B. zwischen 5 mm und 20 mm beabstandet sind. Bei ausreichend kleinem Abstand zwischen den Trägerstäben entsteht ein Kapillareffekt zwischen benachbarten Trägerstäben, der dafür sorgt, dass sich Kapillarmenisken ausbilden, in denen große Mengen an Flüssigkeit, insbesondere Fett und Fleischsaft aus dem Grillgut, gesammelt werden können, ohne dass die Flüssigkeit von den Auflageelementen nach unten abtropft.

Ein besonderer Vorteil der erfindungsgemäßen Lösung ergibt sich aus der Tatsache, dass Fettlaufrinnen bzw. Fettrinnen an den Auflageelementen nicht notwendig sind, weil Fett hauptsächlich entlang der Kapillarmenisken abtransportiert werden kann. Dadurch, dass auf komplizierte und Platz beanspruchende Fettlaufrinnen bzw. Fettrinnen verzichtet werden kann, wird bei dem Schräggrillrost der Erfindung weniger Hitze vom Grillgut abgeschirmt. Zudem ist die Reinigung des Schräggrillrosts der Erfindung erheblich vereinfacht, da die einzelnen Elemente des Grillrostes sehr leicht zugänglich bleiben. Gegenüber dem Stand der Technik, wo das Fett nur entlang der Unterseite der Stäbe eines Schräggrillrostes fließt, ist die Erfindung vorteilhaft. Durch einen Transport des Fettes hauptsächlich durch Kapillarmenisken kann mehr Fett transportiert werden und die Auswirkung bleibt über die gesamte Grilldauer erhalten, weil die Ablagerungen keine zwangsläufigen Fettabtropfstellen mehr sind. Im Übrigen kann die Neigung des Schräggrillrostes gering gehalten werden, weshalb das Grillgut gleichmäßiger gegrillt werden kann.

Ein Schräggrillrost gemäß dem ersten Aspekt der Erfindung kann sowohl als Bestandteil eines neuen Grills als auch als Nachrüstsystem für bestehende Grills verwendet werden. Beispielsweise können an einem Ende des Schräggrillrostes Stützelemente fixiert werden, die eine Neigung des Schräggrillrostes entweder auf ebener Unterlage des Grillkörpers als auch als Aufsatz auf einem schon vorhandenen Grillrost eines herkömmlichen Grillsystems erzeugen. Alternativ oder zusätzlich dazu kann der Grillrostrahmen unterschiedliche Dicken an verschiedenen Enden aufweisen, so dass bei einem Aufsetzen des Grillrostrahmens auf eine ebene Unterlage die Grillgutauflageelemente gegenüber der Horizontalen geneigt werden. Der Grill kann alternativ unterschiedlich hohe Unterlagen für die zwei Enden des Grillrostes aufweisen. Der Schräggrillrost nach der Erfindung kann ohne zusätzliche Stützelemente direkt auf eine Unterlage aufgesetzt werden, sodass die gewünschte Neigung des Schräggrillrostes erzielt wird. Ein zusätzlicher Fettauffangbehälter kann als weiteres Element an den Schräggrillrost als Erweiterung an dessen tiefer liegendem Ende angebracht werden, um abtropfendes Fett aufzufangen. Als Bestandteil eines neuen Grills können die Grillgutauflageelemente in vorgesehenen Öffnungen in Grillkörper eingesteckt werden. Die Öffnungen auf einer Seite sind höher als auf der anderen Seite, so dass sich die Neigung der Grillgutauflagefläche des Schräggrillrostes einstellen lässt.

Ein dachförmiger Grillaufsatz mit zwei Fettauffangbehältern ist als universaler Grillaufsatz sowohl als Bestandteil eines neuen Grills als auch zur Nachrüstung gut geeignet. Durch die Halbierung des Höhenunterschieds ist die Temperaturverteilung gleichmäßiger. Durch zwei Fettbehälter ist das Aufsetzen eines Grillaufsatzes auf einen Grillrost leicht.

Die Anzahl der schräg verlaufenden bzw. geneigten Grillgutauflageflächen kann bei einem Schräggrillrost gemäß dem ersten Aspekt der Erfindung durch geeignete Wahl und Anordnung der Grillgutauflageelemente variiert werden, je nach Einsatzzweck des Schräggrillrostes. Die Anwendung von mehrteiligen Schräggrillrosten bietet Vorteile bezüglich der Reinigung in einem Geschirrspüler wegen kleineren Abmessungen oder der Erleichterung von Zugabe von Holzkohle während des Grillens.

Vorteilhafte Ausgestaltungen und Weiterbildungen ergeben sich aus den weiteren Unteransprüchen sowie aus der Beschreibung unter Bezugnahme auf die Figuren.

Gemäß einigen weiteren Ausführungsformen des Schräggrillrostes kann jeweils mindestens einer der Trägerstäbe der Grillgutauflageelemente einen Rundstab und mindestens jeweils einer der Trägerstäbe der Grillgutauflageelemente ein nicht rundes Profil aufweisen. Rundstäbe sind sehr einfach und kostengünstig herzustellen, aufgrund ihrer äußeren Form auch sehr leicht zu reinigen, und weniger anfällig gegenüber Anhaftungen des aufliegenden Grillguts. Mit Gusseisen und Blechen bietet sich eine höhere Gestaltungsfreiheit. Die Kombination von Rundstab/Rundstäben mit nicht rundem Profil, beispielsweise aus Gusseisen oder Blechen, ermöglicht eine leichte Reinigung, weniger Ankleben des Grillguts, die Erzeugung des gewünschten Kapillareffekts und die vorteilhafte Gestaltungsfreiheit. Beispielsweise kann mit einer Kombination aus zwei trapezförmigen Stäben und einem Rundstab in einem Auflageelement der Kapillareffekt am besten verstärkt werden; oder ein Rundstab flankiert von zwei C-förmigen Leistenprofilen. Zudem sind solche Kombinationen leicht zu reinigen und haben ein konstruktionsbedingt geringes Gewicht.

Gemäß einigen weiteren Ausführungsformen des Schräggrillrostes können jeweils alle der Trägerstäbe der Grillgutauflageelemente ein nicht rundes Profil, wie etwa ein Polygonalleistenprofil, aufweisen. Dieses Polygonalleistenprofil kann zum Beispiel ein Rechtecks- oder Trapezleistenprofil sein. Die Profile können Gusseisen-, Walzdraht/Ziehdraht/Strangpressdraht- oder Blechprofile sein, die durch Umformung von Blech gefertigt werden. Ein Beispiel sind drei rechteckige Leistenprofile nebeneinander. Ein anderes Beispiel sind drei Trapezleistenprofile nebeneinander.

Gemäß einigen weiteren Ausführungsformen des Schräggrillrostes können jeweils alle der Trägerstäbe der Grillgutauflageelemente einen Rundstab aufweisen. Solcher Schräggrillroste mit Rundstäben sind leicht zu fertigen, vermeiden eine Anhaftung von Grillgut an den Trägerstäben und sind einfach zu reinigen.

Gemäß einigen weiteren Ausführungsformen des Schräggrillrostes können mindestens 70% der Grillgutauflageelementejeweils aus mindestens drei Trägerstäben zusammengesetzt sein. Obwohl schon bei zwei Trägerstäben ein guter Kapillareffekt erzielt werden kann, kann der Kapillareffekt durch Ausbildung von zwischen drei oder mehr Trägerstäben verlaufenden Mittenkanälen verstärkt werden. Solche Mittenkanäle können ebenfalls zum Transport von Flüssigkeit wie Fett oder Fleischsaft genutzt werden. Mehr als drei Trägerstäbe in einem Grillgutauflageelement machen den Schräggrillrost schwerer. Grillgutauflageelemente mit 3 oder 4 Stäben können diesen Nachteil jedoch aufwiegen.

Gemäß einigen weiteren Ausführungsformen des Schräggrillrostes kann jeweils mindestens einer der Trägerstäbe der Grillgutauflageelemente senkrecht gegenüber der durch die Grillgutauflageelemente aufgespannten Grillgutauflageebene um einen Tiefenabstand versetzt angeordnet sein. Solche Anordnungen von Trägerstäben übereinander können es begünstigen, dass Fett weniger an Ablagerungen abtropft und dass mehr Fett abtransportiert wird. Einerseits wird der Laufweg der Flüssigkeit vom Grillgut zur Unterseite des Grillgutauflageelementes länger. Dadurch kann die austretende Flüssigkeit unterwegs schon getrocknet sein. Deshalb bilden sich weniger Ablagerungen an der Unterseite des Grillgutauflageelementes. Anderseits muss bei einer Anordnung der Trägerstäbe übereinander das Fett zwischen zwei Trägerstäben durchtreten. Dort wird das Fett aufgrund des Kapillareffektes Kapillarmenisken bilden und unter Einwirkung der Schwerkraft in Richtung der Fettauffangbehälter transportiert anstatt weiter vertikal nach unten zu den Ablagerungen zu fließen. Darüber hinaus können sich bei Grillgutauflageelementen mit drei oder mehr Stäben in einer Anordnung der Trägerstäbe übereinander Mittenkanäle bilden, die größere Mengen Fett abtransportieren können. Bei einer Anordnung der Trägerstäbe nebeneinander bilden sich keine Mittenkanäle.

Gemäß einigen weiteren Ausführungsformen des Schräggrillrostes können zumindest zwei Trägerstäbe in einem Grillgutauflageelement in Längsrichtung mehrfach stellenweise verbunden sein. Diese Verbindungen halten die Trägerstäbe zusammen oder stabilisieren die Trägerstäbe. Manchmal können die Verbindungen einen kompletten Querriegel bilden, welcher alle Grillgutauflageelemente und gegebenenfalls den Grillrostrahmen verbindet. Dies kann die Trägerstäbe stabilisieren oder Sprödigkeiten im Material der Trägerstäbe ausgleichen. In manchen Ausführungsvarianten sind mehrere beabstandete Querriegel sinnvoll.

Gemäß einigen weiteren Ausführungsformen des Schräggrillrostes kann jeweils mindestens einer der Trägerstäbe der Grillgutauflageelemente mindestens an einer einem der jeweils anderen Trägerstäbe nächstliegenden Seitenfläche Vertiefungen, bevorzugt entlang der Staberstreckungsrichtung, aufweisen. Dabei können in manchen Ausführungsformen die Vertiefungen eine Tiefe zwischen 10 µm und 2 mm aufweisen. Insbesondere bei Auflageelementen, die Trägerstäbe nebeneinander aufweisen, kann durch die Schaffung von Vertiefungen die effektive Oberfläche der Trägerstäbe vergrößert und damit der Kapillareffekt verbessert werden. Solche Vertiefungen können beispielsweise Rillen, abgesenkte Kanäle oder andere die glatte Oberfläche brechende Muster aufweisen. Rillen können beispielsweise durch welliges Blech, aber auch durch Material bearbeitende Verfahren wie durch Drahtziehen, Walzen, Pressen, oder Strangpressen realisiert werden. Des Weiteren können Vertiefungen auch durch grobes Schleifen, Sandstrahlen oder Kugelstrahlen erzeugt werden.

Gemäß einigen weiteren Ausführungsformen des Schräggrillrostes kann mindestens einer der Trägerstäbe der Grillgutauflageelemente andere Querschnittsdimensionen aufweisen als die anderen Trägerstäbe. Bei Grillgutauflageelementen, die nur Rundstäbe oder nur nicht-runde Profile aufweisen, ist eine unterschiedliche Dimensionierung der Trägerstäbe manchmal auch sinnvoll. Beispielsweise kann ein Grillgutauflageelement mit einem dicken Rundstab unterhalb zweier dünnerer Rundstäben eine gute Stabilität durch den dicken Rundstab mit einer Gewichtsreduzierung durch die zwei dünneren Rundstäbe kombinieren.

Gemäß einigen weiteren Ausführungsformen des Schräggrillrostes können die in Abstand zueinander stehenden Grillgutauflageelemente entlang ihrer Längserstreckung parallel zueinander verlaufen. Solche Konstruktionen sind leicht herzustellen und garantieren einen sehr guten Flüssigkeits- bzw. Fettablauf.

Alternativ dazu können gemäß einigen weiteren Ausführungsformen des Schräggrillrostes die in Abstand zueinander stehenden Grillgutauflageelemente entlang ihrer Längserstreckung radial von dem Umfang des Grillrostrahmens zu einem Mittelpunkt des kreisförmigen Grillrostrahmens verlaufen. Bei Rund- und Kugelgrills ist ein radiales Verlaufen von Auflageelementen sinnvoll, wenn das Fett in der Mitte des Grills gesammelt werden soll.

Gemäß einigen weiteren Ausführungsformen des Schräggrillrostes können die Trägerstäbe der in Abstand zueinander stehenden Grillgutauflageelementen entlang ihrer Längserstreckung gegenüber dem Grillrostrahmen oder Querriegeln verschiebbar mit dem Grillrostrahmen oder den Querriegeln verbunden sein. Würden die Trägerstäbe mit dem Rahmen oder den Querriegeln fest verbunden, könnten sich die Trägerstäbe bei ungleichmäßiger oder zu starker Hitze verformen, so dass die Abstände der Trägerstäbe in einem Auflageelement unbeabsichtigt zu groß werden, was die Ausbildung des Kapillareffekts schmälern würde. Wenn die Trägerstäbe hingegen flexibel mit dem Grillrostrahmen oder Querriegel verbunden sind, kann sich jeder Trägerstab in einem Auflageelement bei Hitze ohne Verformung frei ausdehnen. Außerdem wird die Reinigung bei flexibler Trägerstabverbindung in vorteilhafter Weise erleichtert. Zum Beispiel können Ausnehmungen in Rundrohr, Quadratrohr, C-Profil oder U-Profil oder andere Profile durch mechanische Bearbeitung, Wasserstrahlen, Lasern, Plasmaschneiden, Stanzen oder Tiefziehen verarbeitet werden. Durch beispielsweise zwei Gewindestangen, zwei Bolzen, zwei Rundstäbe oder zwei Profile können zusammen mit den zwei Rahmenprofilen, die eine Mehrzahl von Ausnehmungen aufweisen, verschraubte stabile Rahmen gebildet werden. Die Trägerstäbe werden in die Ausnehmungen eingefädelt. Die Trägerstäbe können sich nach festem Anziehen der Schraubverbindung noch entlang ihrer Längserstreckung frei bewegen. Der Spielraum der Trägerstäbe kann durch eine entsprechende Einstellung der Schraubverbindung variabel eingestellt werden. Anstelle von Schraubverbindungen können auch andere Verbindungen genutzt werden. Anstelle von Ausnehmungen können auch Öffnungen in gebogenem Blech oder Draht genutzt werden.

Trockengargeräte, z.B. Backöfen, Grills jeder Art, z.B. Kugelgrill, Rundgrill, Säulengrill, Trichtergrill, Schwenkgrill, Gartengrill, Grillwagen, Grillstation oder Grillkamin mit einem Schräggrillrost nach der Erfindung sind beim Grillen sehr raucharm und dieser Effekt lässt auch mit andauernder Grilldauer nicht nach.

Gemäß einigen Ausführungsformen des Trockengargerätes kann das Trockengargerät weiterhin mindestens einen Fettauffangbehälter aufweisen. Dieser Fettauffangbehälter kann beispielsweise unter der gegenüber der Horizontalen tiefsten Stelle des Schräggrillrosts innerhalb des Garraums angeordnet werden. Bei einem Holzkohlegrill kann ein solcher Fettauffangbehälter sinnvoll sein. Anstelle eines Fettauffangbehälters mit geschlossener Seitenwand kann der Fettauffangbehälter offen sein, der weiter zu einem gegebenenfalls geschlossenen Fettauffangbehälter führt. Bei einem Gasgrill ist ein offener Fettauffangbehälter denkbar. Das Fett landet zum Beispiel zuerst auf der Unterlage für den Schräggrillrost, die als offener Fettfangbehälter fungiert; danach fließt es auf einem Fettsammelblech unterhalb der Gasbrenner ab zu einem (weiteren) Fettauffangbehälter, der sich unterhalb des Fettsammelbleches befinden kann.

Gemäß einigen weiteren Ausführungsformen des Trockengargerätes kann der Garraum ein kreisförmiges Querschnittsprofil aufweisen, insbesondere dann, wenn der Schräggrillrost in Abstand zueinander stehenden Grillgutauflageelemente aufweist, die entlang ihrer Längserstreckung radial von dem Umfang des Grillrostrahmens zu einem Mittelpunkt des kreisförmigen Grillrostrahmens verlaufen. Über dem Fettauffangbehälter kann der Schräggrillrost einen zentralen Grillrostteil mit ebener Grillgutauflagefläche besitzen, welcher für ein indirektes Grillen geeignet ist. Ein Garraum kann auch zu mindestens einer Seite hin offen sein, wie beispielsweise bei einem Grill ohne Deckel oder Abdeckung.

Gemäß einigen Ausführungsformen des Trockengargerätes kann das Trockengargerät weiterhin eine Hitzequelle aufweisen, deren Hitze erzeugende Elemente im Wesentlichen in konstantem Abstand zu den Grillgutauflageelementen des Schräggrillrosts im Garraum angeordnet sind. Dies ist besonders dann vorteilhaft, wenn der Hitzegradient entlang der gesamten Grillgutauflagefläche des Schräggrillrostes möglichst klein gehalten werden soll, so dass Grillgut an jedem Teil der Grillgutauflagefläche möglichst die gleiche Wärmemenge aufnehmen kann. Bei einem Gasgrill beispielsweise können die Gasbrenner parallel zu den Grillgutauflageelementen verlaufen. So wird das Grillgut überall gleichmäßig erhitzt. Wenn der Gasgrill Flammenabdeckungen besitzt, können diese ebenfalls parallel zu der Grillauflagefläche verlaufen. Bei einem Holzkohlegrill kann der Boden bzw. der Rost der Holzkohleschale auch parallel zu Auflageelementen verlaufen. So wird das Grillgut überall gleichmäßig erhitzt.

Weil der Schräggrillrost gemäß dem ersten Aspekt der Erfindung ein Abtropfen von Fett nach unten stark reduzieren kann, kann solch ein Schräggrillrost auch für den Einsatz in einem Backofen sinnvoll sein. Vorteilhafterweise kann dann auf das Einbringen einer Wasserschale in den Garraum des Backofens bei Nutzung der Grillfunktion verzichtet werden. Dabei kann es möglich sein, nur am niedrigen Ende des Schräggrillrostes einen Fettbehälter zu platzieren. Außerdem kann es möglich sein, das Grillgut im Backofen nicht nur von oben zu erhitzen, sondern eine Grillfunktion mit gleichzeitiger Oberhitze und Unterhitze zu implementieren.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1a eine Querschnittsansicht von zwei Auflageelementen eines Schräggrillrostes gemäß dem Stand der Technik;
Fig. 1b eine Seitenansicht des Schräggrillrostes der Fig. 1a;
Fig. 1c eine Seitenansicht des Schräggrillrostes der Fig. 1a nach einer längeren Benutzung im Grillbetrieb;
Fig. 2 eine Querschnittsansicht von zwei Auflageelementen eines Schräggrillrostes gemäß einer Ausführungsform der Erfindung;
Fig. 3a eine Querschnittsansicht von zwei Auflageelementen eines Schräggrillrostes gemäß einer weiteren Ausführungsform der Erfindung;
Fig. 3b eine Querschnittsansicht von einem Auflageelement eines Schräggrillrostes gemäß einer weiteren Ausführungsform der Erfindung;
Fig. 3c eine Seitenansicht des Schräggrillrostes der Fig. 3b;
Fig. 4a eine Querschnittsansicht einer Variante eines Auflageelementes eines Schräggrillrostes gemäß einer weiteren Ausführungsform der Erfindung;
Fig. 4b eine Querschnittsansicht einer Variante eines Auflageelementes eines Schräggrillrostes gemäß einer weiteren Ausführungsform der Erfindung;
Fig. 4c eine Querschnittsansicht einer Variante eines Auflageelementes eines Schräggrillrostes gemäß einer weiteren Ausführungsform der Erfindung;
Fig. 4d eine Querschnittsansicht einer Variante eines Auflageelementes eines Schräggrillrostes gemäß einer weiteren Ausführungsform der Erfindung;
Fig. 4e eine Querschnittsansicht einer Variante eines Auflageelementes eines Schräggrillrostes gemäß einer weiteren Ausführungsform der Erfindung;
Fig. 4f eine Querschnittsansicht einer Variante eines Auflageelementes eines Schräggrillrostes gemäß einer weiteren Ausführungsform der Erfindung;
Fig. 4g eine Seitenansicht des Schräggrillrostes der Fig. 4f;
Fig. 5a eine Querschnittsansicht von zwei Auflageelementen eines Schräggrillrostes gemäß einer weiteren Ausführungsform der Erfindung;
Fig. 5b eine Draufsicht auf den Schräggrillrost der Fig. 5a oder 5c;
Fig. 5c eine Querschnittsansicht einer Variante eines Auflageelementes eines Schräggrillrostes gemäß einer weiteren Ausführungsform der Erfindung;
Fig. 6a eine Querschnittsansicht einer Variante eines Auflageelementes eines Schräggrillrostes gemäß einer weiteren Ausführungsform der Erfindung;
Fig. 6b eine Draufsicht auf den Schräggrillrost der Fig. 6a oder 6c;
Fig. 6c eine Querschnittsansicht einer Variante eines Auflageelementes eines Schräggrillrostes gemäß einer weiteren Ausführungsform der Erfindung;
Fig. 6d eine Draufsicht auf einen Schräggrillrost mit Querriegel und ohne Rahmen gemäß einer weiteren Ausführungsform der Erfindung;
Fig. 7a eine Querschnittsansicht einer Variante eines Auflageelementes eines Schräggrillrostes gemäß einer weiteren Ausführungsform der Erfindung;
Fig. 7b eine Querschnittsansicht einer Variante eines Auflageelementes eines Schräggrillrostes gemäß einer weiteren Ausführungsform der Erfindung;
Fig. 8a einen Querschnitt der Seitenansicht eines Kugelgrills mit einem trichterförmigen Schräggrillrost und einer zentralen Fettauffangschale gemäß einer weiteren Ausführungsform der Erfindung;
Fig. 8b eine Draufsicht auf den trichterförmigen Schräggrillrost des Kugelgrills der Fig. 8a;
Fig. 9a einen Querschnitt der Seitenansicht eines Kugelgrills mit einem V-förmigen Schräggrillrost und einer zentralen Fettauffangschale gemäß einer weiteren Ausführungsform der Erfindung;
Fig. 9b eine Draufsicht auf den V-förmigen Schräggrillrost des Kugelgrills der Fig. 9a;
Fig. 9c einen Querschnitt der Seitenansicht eines Kugelgrills mit einem V-förmigen Schräggrillrost und zwei seitlichen Fettauffangschalen gemäß einer weiteren Ausführungsform der Erfindung;
Fig. 10a einen Querschnitt der Seitenansicht eines Gasgrills mit einem Schräggrillrost gemäß einer weiteren Ausführungsform der Erfindung;
Fig. 10b einen Querschnitt der Seitenansicht eines Holzkohlegrills mit einem Schräggrillrost gemäß einer weiteren Ausführungsform der Erfindung;
Fig. 10c einen Querschnitt der Seitenansicht eines Gasgrills mit zwei V-förmigen Schräggrillrosten gemäß einer weiteren Ausführungsform der Erfindung;
Fig. 11 eine beispielhafte Skizze einer Fettrinne gemäß dem Stand der Technik;
Fig. 12 eine perspektivische Ansicht einer Variante eines Auflageelementes eines Schräggrillrostes gemäß einer weiteren Ausführungsform der Erfindung;
Fig. 13 eine Draufsicht auf ein Grillrostrahmensegment zur Aufnahme von Trägerstäben eines Schräggrillrostes gemäß einer weiteren Ausführungsform der Erfindung;
Fig. 14 eine Aufsicht auf einen Schräggrillrost gemäß einer weiteren Ausführungsform der Erfindung; und
Fig. 15 eine Aufsicht auf einen Schräggrillrost gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

Grillen im Sinne der vorliegenden Offenbarung umfasst eine Form der Lebensmittelzubereitung, die eine auf direkter oder indirekter Wärmeeinstrahlung beruhende Trockengartechnik bezeichnet, insbesondere bei starker Hitzeentwicklung an und in dem Gargut, verursacht durch eine oder mehrere in Nähe zum Gargut angeordnete Hitzequellen.

Gargut im Sinne der vorliegenden Offenbarung umfasst jegliche Form von durch Grillen zubereitete Lebensmittel, insbesondere fetthaltige Lebensmittel wie etwa Fleisch, Fisch, mariniertes Gemüse oder Grillkäse (auch als Grillgut bezeichnet).

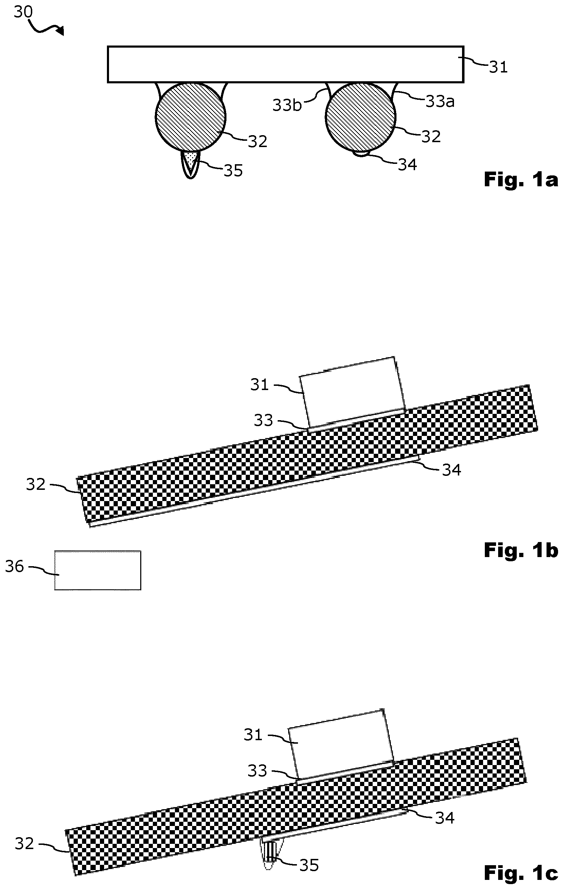

In den Fig. 1a, 1b und 1c sind Details eines bekannten Schräggrillrostes 30 gezeigt, welcher über mehrere Auflageelemente 32 verfügt. Die Auflageelemente 32 können zum Beispiel Rundstäbe sein, die im Wesentlichen parallel und in einem bestimmten Auflageabstand zueinander angeordnet sind. Fig. 1a zeigt eine Querschnittsansicht zweier solcher Rundstäbe 32, die gegenüber der Horizontale geneigt sind. Gargut 31, wie beispielsweise ein Stück Fleisch, liegt auf den beiden Rundstäben 32 auf.

Fett, welches aus dem Gargut 31 austreten kann, sammelt sich aufgrund der zwischen Gargut 31 und dem jeweiligen Rundstab 32 herrschenden Kapillarkräfte zunächst in einem Fettfilm 33, der links- und rechtsseitigen Menisken 33a bzw. 33b zwischen Rundstab 32 und Gargut 31 bildet (in Fig. 1a mit kurzen konkaven Kurvenabschnitten illustriert). Das Fett fließt unter Einfluss von Schwerkraft und Adhäsionskräften entlang der Oberfläche der Rundstäbe 32 zu deren Unterseite und bildet Fettfilme oder Fetttropfen 34. Diese Fetttropfen 34 fließen dann bei geneigtem Schräggrillrost 30 entlang der schräg stehenden Rundstäbe 32 in Richtung einer in Fig. 1b schematisch dargestellten Fettwanne 36. Fig. 1b zeigt den Schräggrillrost 30 unter Idealbedingungen, unter denen sämtliches Fett in die Fettwanne 36 abfließt und nicht vorher nach unten abtropft.

Häufig tritt aus dem Gargut 31 nicht nur Fett, sondern beispielsweise auch Fleischsaft aus, insbesondere, wenn das Gargut 31 frisch auf den Schräggrillrost 30 gelegt worden ist. Der Fleischsaft trocknet aufgrund der stärkeren Hitzebildung an der Unterseite der Rundstäbe 32 aus, so dass es nach und nach zu Ablagerungen 35 kommen kann, von denen in Fig. 1a eine beispielhafte Ablagerung 35 an der Unterseite des linken Rundstabes 32 dargestellt ist. Solche Ablagerungen 35 stellen potentielle Abtropfstellen für Fett dar. Fig. 1c zeigt den Schräggrillrost 30 unter solchen verschlechterten Randbedingungen, unter denen das Fett aus dem Gargut 31 an der Ablagerung 35 abtropft und die Fettwanne 36 nicht oder jedenfalls nicht vollständig erreichen kann.

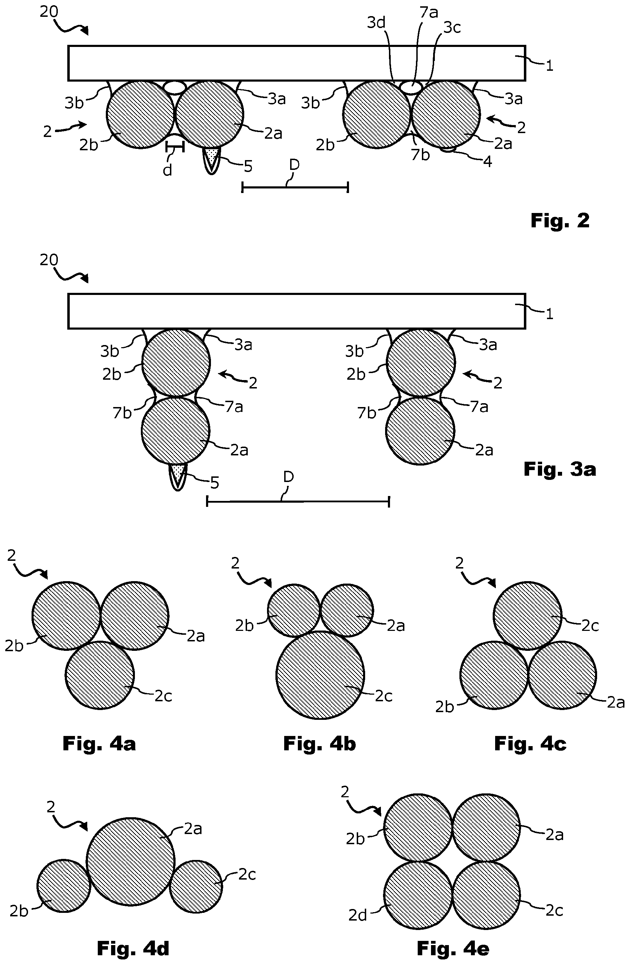

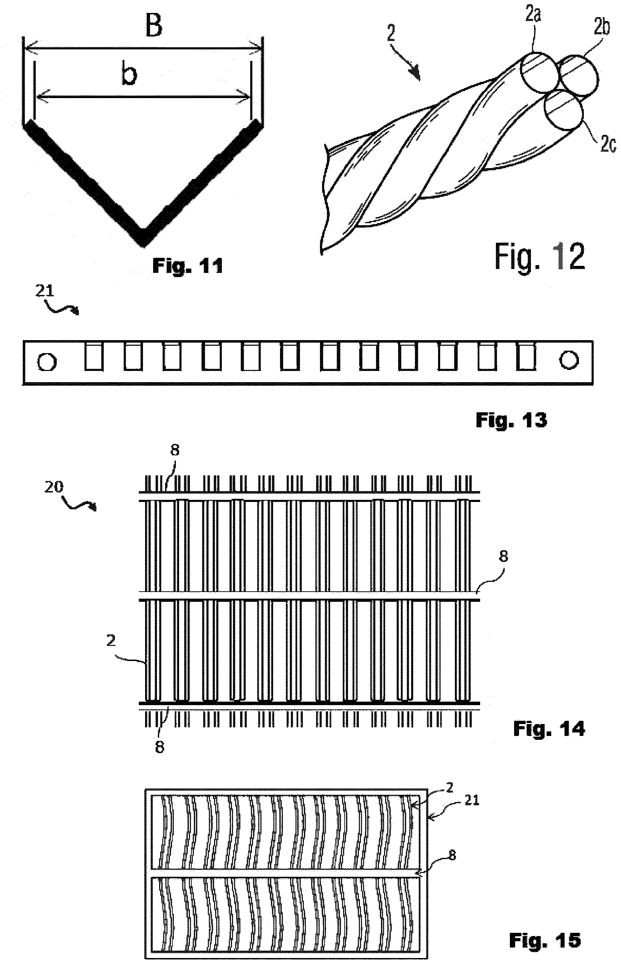

In Fig. 2 ist eine Querschnittsansicht von zwei Grillgutauflageelementen 2 eines Schräggrillrostes 20 illustriert, die keine Fettrinnen aufweisen. Eine Fettrinne nach dem Stand der Technik ist in Fig. 11 dargestellt. Auf den zwei Grillgutauflageelementen 2 ist schematisch ein Stück Gargut 1 - beispielsweise ein Stück Fleisch, eine Wurst oder ein Grillkäse - dargestellt, welches auf den Oberseiten der Grillgutauflageelemente 2 aufliegt. Die zwei Grillgutauflageelemente 2 sind um einen relativ gesehen großen Abstand D voneinander beabstandet. D kann beispielsweise 5 mm - 20 mm betragen. Der Durchmesser des Rundstabs kann z.B. 2 mm - 6 mm betragen. Jedes der Grillgutauflageelemente 2 kann für die Aufnahme in einem Grillrostrahmen oder Querstäben bzw. Querriegeln vorgesehen sein. In Fig. 13 ist ein Grillrostrahmensegment mit einer Mehrzahl von Ausnehmungen zur Aufnahme von Trägerstäben dargestellt. Die Trägerstäbe können einfach in die Ausnehmungen eingefädelt werden. Die Trägerstäbe sind miteinander nicht verbunden. Die Abmessung der Ausnehmungen definiert den Abstand zwischen Trägerstäben 2a und 2b. Durch z.B. zwei Bolzen, die in die zwei runden Bohrungen in Fig. 13 eingefädelt und mit Muttern angeschraubt werden, wird ein stabiler Schräggrillrost 20 gebildet. Die Trägerstäbe 2a und 2b haben nach festem Anziehen der Schraubverbindung entlang ihrer Längserstreckung etwas Spiel. So kann eine Verformung der Trägerstäbe bei ungleichmäßiger Hitze vermieden werden. Die Bolzen können auch als Grillgutauflageelemente betrachtet werden. Deshalb brauchen nicht alle der Grillgutauflageelemente mindestens zwei Trägerstäbe aufweisen. Solche Grillgutauflageelemente können nicht so viel Fett 4 wie Grillgutauflageelemente mit mehr Trägerstäben transportieren, vereinfachen aber die Konstruktion. Anstelle von Schraubverbindungen können auch andere Verbindungen genutzt werden, mit denen sich die Trägerstäbe bei ungleichmäßiger Hitze frei ausdehnen können. Beispielsweise können die beiden seitlichen Grillgutauflageelemente aus Rundstäben mit Absatz gefertigt werden. Nach Einfädeln des Absatzes in die Bohrung wird ein Stift in eine kleine Bohrung im Absatz eingesteckt um Herausrutschen des Absatzes aus dem Rostrahmensegment zu verhindern. In Fig. 14 ist ein Schräggrillrost 20 ohne Rahmen, sondern nur mit Querriegel 8 dargestellt. Die Trägerstäbe 2a und 2b können z.B. durch mehrfach elektrisches Punktschweißen miteinander verbunden werden, um ein Grillgutauflageelement 2 zu bilden. Die Verbindungen zwischen Querstäben 8 und Trägerstäben 2a und 2b können ebenfalls durch Punktschweißen hergestellt werden. Punktschweißstellen beeinflussen das Fließen des Fettes zwischen den Stäben nicht ungünstig. Mit gleicher Methode kann auch ein Schräggrillrost mit Rahmen gebaut werden. Ein derartiger Schräggrillrost 20 kann z.B. in einem Gasgrill eingesetzt werden, bei dem stark ungleichmäßige Hitze üblicherweise nicht auftritt.

Eine Anzahl der Grillgutauflageelemente 2 umfasst zwei runde Trägerstäbe 2a und 2b, die im Wesentlichen gleich lang sind und um einen Abstand d, der weniger als 1 mm beträgt, voneinander beabstandet sind. Im Beispiel der Fig. 2 beträgt der Abstand d sogar 0 mm, das heißt, die beiden Trägerstäbe 2a und 2b grenzen aneinander an und stehen in wechselseitigem Kontakt miteinander. d = 0 mm vereinfacht die Produktion, gewährleistet einen guten Kapillar-Effekt und ist deshalb bevorzugt. d =0 mm bedeutet, dass die Stäbe auf Anschlag zueinander liegen. Bei d = 0 mm kann das Fett auch durch kleine Zwischenräume zwischen zwei Trägerstäben 2a und 2b hindurchtreten, um den Kapillarmeniskus 7b zu bilden, da die Oberfläche der Trägerstäbe 2a und 2b eine gewisse fertigungsbedingte Rauigkeit aufweist.

Die Trägerstäbe 2a und 2b jedes der Grillgutauflageelemente 2 verlaufen parallel zueinander. Im Grillbetrieb des Schräggrillrosts 20 verlaufen sie unter einem Neigungswinkel zwischen 1° und 30° gegenüber der Horizontalen, so dass Flüssigkeits- oder Fetttropfen, die sich an den Kapillarmenisken 7a und 7b sammeln, durch eine Schwerkraftkomponente entlang den Trägerstäben 2a und 2b ablaufen.

Es kann auch möglich sein, dass die Trägerstäbe kurvig oder spiralförmig verlaufen. Eine beispielhafte Ausführungsform eines Grillgutauflageelementes 2 mit drei sich helikal umeinander windenden Trägerstäben 2a, 2b und 2c ist beispielhaft in Fig. 12 illustriert.

Wie schon im Zusammenhang mit Fig. 1a erläutert, sammelt sich Fett, welches aus dem Gargut 1 austreten kann, aufgrund der zwischen Gargut 1 und dem jeweiligen Trägerstab 2a bzw. 2b herrschenden Kapillarkräfte zunächst in einem Fettfilm, der links- und rechtsseitigen Menisken 3a bzw. 3b, 3c und 3d zwischen Trägerstab 2a bzw. 2b und Gargut 1 bildet (in Fig. 2 mit kurzen konkaven Kurvenabschnitten illustriert). Gleichzeitig bilden sich aber auch weitere Fettfilme an den Grenzen beider Trägerstäbe 2a und 2b. Dadurch wird die effektive Oberfläche der Grillgutauflageelemente 2 gegenüber den in Fig. 1a gezeigten Rundstäben 32 vergrößert und die Fettaufnahmekapazität der Grillgutauflageelemente 2 verbessert. Deshalb ist die Fetttransportfähigkeit der zwei Trägerstäbe 2a und 2b viel größer als die Fetttransportfähigkeit zweier einzelner Stäbe, die voneinander um mehr als 1 mm beabstandet sind. Das Fett fließt dann unter Einfluss von Schwerkraft und Adhäsionskräften entlang der Oberfläche der beiden Trägerstäbe 2a und 2b zu deren Unterseite und zu den Kapillarmenisken 7a und 7b und bildet dort Fettfilme oder Fetttropfen. Diese Fettfilme und etwaige Fetttropfen fließen dann bei geneigtem Schräggrillrost 20 entlang der schräg stehenden Trägerstäbe 2a und 2b ab.

Besonders vorteilhaft ist, dass sich Ablagerungen 5 zwar nicht vollständig vermeiden lassen, aber an solchen Ablagerungen 5 viel weniger Fett abtropfen wird, da abfließendes Fett über die Kapillarmenisken 7a und 7b hauptsächlich zwischen den Trägerstäben 2a und 2b abfließen kann. An diesen Grenzstellen zwischen den beiden Trägerstäben 2a und 2b kann sich konstruktionsbedingt keine Ablagerung 5 bilden.

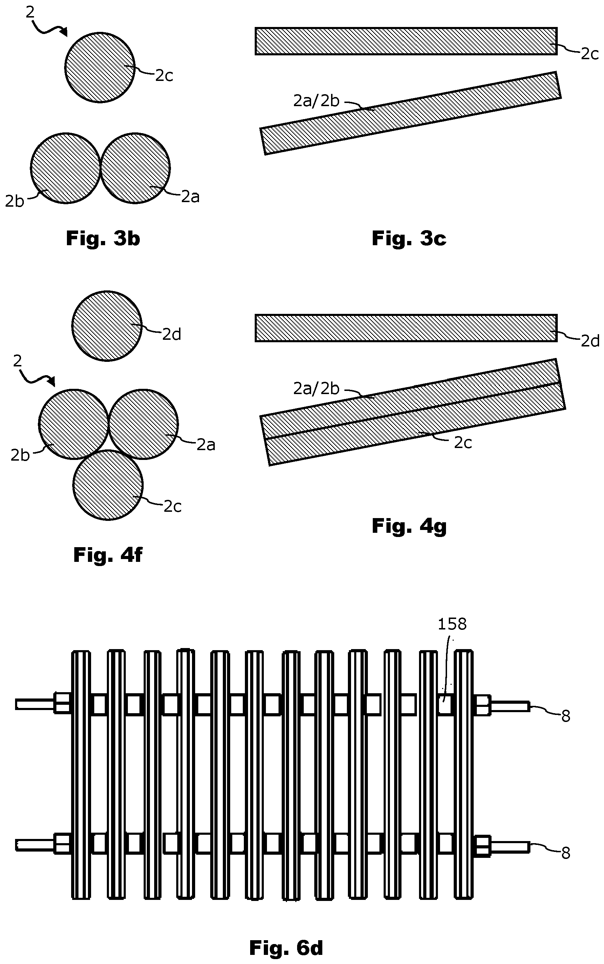

In Fig. 3a ist eine Querschnittsansicht von zwei anders aufgebauten Grillgutauflageelementen 2 eines Schräggrillrostes 20 illustriert. Grundsätzlich weisen auch in Fig. 3a die Grillgutauflageelemente 2 zwei runde Trägerstäbe 2a und 2b auf, die aber nicht nebeneinander (wie in Fig. 2), sondern übereinander angeordnet sind. Wie bei der Konstruktion der Fig. 2 wird das Fett aus dem Gargut 1 hauptsächlich durch die Kapillarmenisken 7a und 7b zwischen den zwei Trägerstäben 2a und 2b transportiert und Ablagerungen 5 stellen für ein Abtropfen von Fett nur eine untergeordnete Rolle. Fett, welches von den Menisken 3a und 3b den Trägerstab 2b hinunterläuft, wird von den Kapillarmenisken 7a und 7b gewissermaßen komplett angesaugt. Im Übrigen ist der Weg vom Gargut 1 zu der Unterseite des unteren Trägerstabes 2a länger, so dass jeglicher Fleischsaft meistens unterwegs schon ausgetrocknet ist, und sich dadurch weniger Ablagerungen 5 bilden können. Das kann Fettbrand auch über eine längere Grilldauer hinweg effektiv vermeiden.

Fig. 3b (Querschnitt von 3c) und 3c zeigen ein weiteres Beispiel. In einem Grillgutauflageelement 2 befindet sich ein horizontal verlaufender Trägerstab 2c oberhalb zweier gegenüber der Horizontalen um 1° - 30° geneigten Trägerstäben 2a und 2b, deren Abstand d voneinander kleiner als 1 mm, bevorzugt gleich 0 mm ist. Das Fett aus dem Grillgut tropft von dem oberen Trägerstab 2c auf die unteren zwei schräg verlaufenden Trägerstäbe 2a und 2b, die das Fett zu einem Fettauffangbehälter transportieren. Die Ablagerungen, die sich am oberen Trägerstab 2c bilden, stören nicht. Sämtliches Grillgut erhält gleichmäßige Hitze, weil es keinen Höhenunterschied an verschiedenen Stellen der Grillgutauflagefläche mehr gibt. Der Nachteil dabei ist, dass potentiell mehr Hitzestrahlung durch die unteren Trägerstäbe 2a und 2b abgeschirmt wird.

In den Fig. 4a bis 4e sind verschiedene Varianten von Grillgutauflageelementen 2 gezeigt, die unterschiedliche Anordnungen, Querschnittsgrößen und Mengen von runden Trägerstäben 2a, 2b, 2c bzw. 2d aufweisen können. Jede dieser Varianten kann für einen Einsatz in einem Schräggrillrost 20 geeignet sein. Die Anzahl der Trägerstäbe kann drei, vier oder mehr betragen. Die Trägerstäbe 2a, 2b, 2c bzw. 2d können dabei Rundstäbe gleichen oder unterschiedlichen Durchmessers sein. Es kann beispielsweise möglich sein, zwei Trägerstäbe 2a, 2b als Rundstab mit gleichem Durchmesser und einen Trägerstab 2c als Rundstab mit größerem Durchmesser vorzusehen. In Fig. 4b ist ein dicker Trägerstab unterhalb zweier kleiner Trägerstäbe mit 50% Durchmesser angeordnet. Der große Trägerstab kann auch oberhalb der zwei kleinen Trägerstäbe sein. Die Trägerstäbe 2a, 2b, 2c bzw. 2d können jeweils paarweise mit einem Abstand von weniger als 1 mm voneinander, bevorzugt auf Anschlag angeordnet werden. Paarweise bedeutet zwischen 2a-2b, 2a-2c, 2b-2c bei Fig. 4a, 4b und 4c, 2a-2b und 2a-2c bei Fig. 4d, 2a-2b, 2a-2c, 2b-2d und 2c-2d bei Fig. 4e. Der Abstand 2b-2c bei Fig. 4d kann größer als 1 mm sein. Es ist möglich, Varianten mit einer ersten Anzahl von Trägerstäben nebeneinander und einer zweiten Anzahl von Trägerstäben unterhalb der ersten Anzahl von Trägerstäben vorzusehen. Dabei ist mindestens einer der Trägerstäbe der Grillgutauflageelemente 2 senkrecht gegenüber der Grillgutauflagefläche um einen Tiefenabstand nach unten versetzt angeordnet. Das ist der Fall bei Fig. 4a, 4b, 4c, und 4e. Den Varianten ist grundsätzlich gemein, dass in den Lücken zwischen den Trägerstäben 2a, 2b, 2c bzw. 2d jeweils zusätzliche Ablaufkanäle für Flüssigkeit bzw. Fett geschaffen werden können. Bei der Variante Fig. 4d gibt es keinen Ablaufkanal. Hier ist es vorteilhaft, wenn der Trägerstab 2a etwas höher als die Trägerstäbe 2b und 2c ist. Dann muss das Fett zwischen zwei Trägerstäben fließen und kann von dem Kapillarmeniskus zwischen den Trägerstäben 2a und 2b oder zwischen Trägerstäben 2a und 2c angesaugt werden. Wenn alle drei Trägerstäbe gleich hoch sind, kann das Fett entlang der Außenseite von den Trägerstäben 2b oder 2c fließen. Fett kann an Ablagerungen, die sich eventuell an der Unterseite der Trägerstäbe 2b oder 2c gebildet haben, tropfen.

Fig. 4f (Querschnitt von 4g) und 4g zeigen ein weiteres Beispiel. In einem Grillgutauflageelement 2 befindet sich ein horizontal verlaufender Trägerstab 2d oberhalb dreier gegenüber der Horizontalen um 1° - 30° geneigten Trägerstäben 2a, 2b und 2c, deren Abstand d voneinander kleiner als 1 mm, bevorzugt auf Anschlag ist. Das Fett aus Grillgut tropft von dem oberen Trägerstab 2d auf die unteren drei schräg verlaufenden Trägerstäbe 2a, 2b und 2c, die das Fett zu einem Fettauffangbehälter transportieren. Die Ablagerungen, die sich am oberen Trägerstab 2d bilden, stören nicht. Sämtliches Grillgut wird aufgrund der ebenen Grillgutauflagefläche gleichmäßig erhitzt, auch wenn mehr Hitzestrahlung abgeschirmt wird.

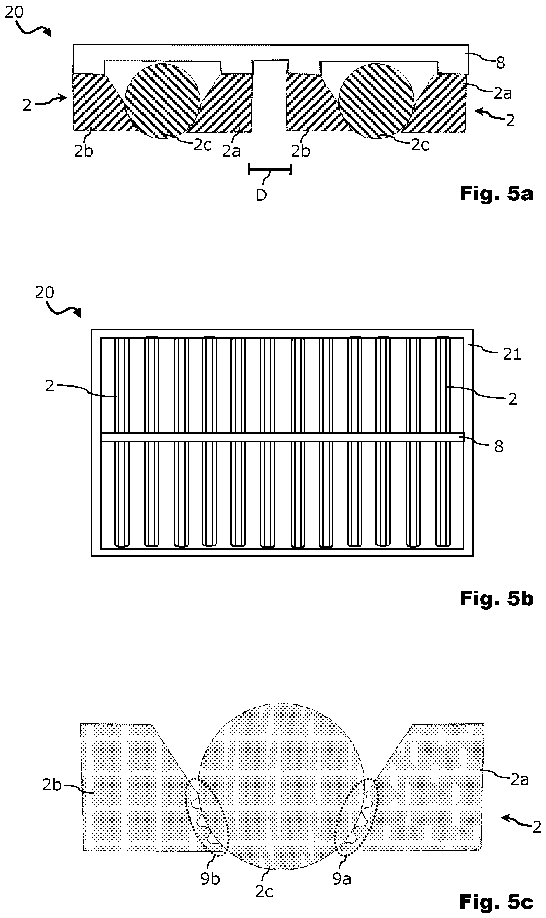

Fig. 5a zeigt eine Querschnittsansicht von zwei Grillgutauflageelementen 2 eines Schräggrillrostes 20, welcher beispielsweise aus Gusseisen gefertigt sein kann.

Dabei weist jedes der Grillgutauflageelemente 2 drei Trägerstäbe 2a, 2b, 2c auf, so dass der Abstand zwischen Trägerstäben 2a und 2c sowie zwischen Trägerstäben 2b und 2c weniger als 1 mm beträgt - bevorzugt auf Anschlag, wie in Fig. 5a dargestellt - und die Trägerstäbe nebeneinander angeordnet sind. Der mittlere Trägerstab 2c ist ein Rundstab und ragt höher nach oben aus der Grillgutauflagefläche heraus als die beiden seitlichen Trägerstäbe 2a und 2b mit jeweils einem trapezförmigen Querschnittsprofil. Der Trägerstab 2c kann durch einen trapezförmigen Stab ersetzt werden.

In Fig. 5c ist dargestellt, dass die beiden seitlichen Trägerstäbe 2a und 2b an den Kontaktflächen mit dem mittleren Trägerstab 2c Vertiefungen entlang der Staberstreckungsrichtung aufweisen, die in Fig. 5c allgemein mit Bezugszeichen 9a bzw. 9b bezeichnet werden. Diese Vertiefungen können zum Beispiel eine Tiefe zwischen 10 µm und 2 mm aufweisen und rillenförmigen Verlauf haben. Durch die Vertiefungen wird die effektive Oberfläche der Trägerstäbe 2a, 2b vergrößert und dadurch die Fett-Transportfähigkeit erhöht.

Fig. 5b illustriert eine Draufsicht auf den Schräggrillrost 20 mit den Grillgutauflageelementen 2 der Fig. 5a oder 5c. Der Grillrostrahmen 21 kann in diesem Fall rechteckig sein und an den Längsseiten des Grillrostrahmens 21 können die jeweiligen Grillgutauflageelemente 2 bzw. Trägerstäbe 2a, 2b, 2c lösbar eingesetzt werden. Oder der Grillrostrahmen 21 samt Querriegel 8 und Trägerstäben 2a und 2b sind als eine ganze Zeile gegossen. Der Querriegel 8 stabilisiert die spröden Trägerstäbe 2a und 2b. Der runde Trägerstab 2c, gegossen oder gezogen, wird lose zwischen die Trägerstäbe 2a und 2b eingelegt. Die Anzahl der Querriegel 8 ist in Fig. 5b beispielhaft mit einem Querriegel mittig durch den Grillrostrahmen 21 hindurch gezeigt, aber selbstverständlich kann die Anzahl der Querriegel 8 auch niedriger oder höher sein, je nach Größe des Schräggrillrostes 20 und der gewünschten Biegestabilität der Grillgutauflageelemente 2.

Fig. 15 zeigt einen Schräggrillrost mit kurvigen Trägerstäben, die 2-dimensional in einer Ebene verlaufen. Fig. 5a zeigt eine Querschnittsansicht eines Beispiels nach Fig. 15. Fig. 5c zeigt eine Querschnittsansicht eines weiteren Beispiels nach Fig. 15, wo die beiden seitlichen Trägerstäbe 2a und 2b an den Kontaktflächen mit dem mittleren Trägerstab 2c Vertiefungen entlang der Staberstreckungsrichtung aufweisen. Der Grillrostrahmen 21 samt Querriegel 8 und Trägerstäbe 2a und 2b kann als eine ganze Zeile gegossen werden. Trägerstäben 2a und 2b mit trapezförmigem Querschnittsprofil verlaufen 2-dimensional kurvig. Runde oder trapezförmige Trägerstäbe 2c aus Gusseisen oder Stahl können lose zwischen 2a und 2b eingelegt werden. Bei dem Beispiel ist der Neigungswinkel der Trägerstäbe 2a, 2b und 2c gegen Horizontale nicht konstant, sondern pendelt um einen Mittelwert. Die Trägerstäbe 2a, 2b und 2c verlaufen bei Grillbetrieb des Schräggrillrosts unter Neigungswinkeln 1° - 30° gegen die Horizontale.

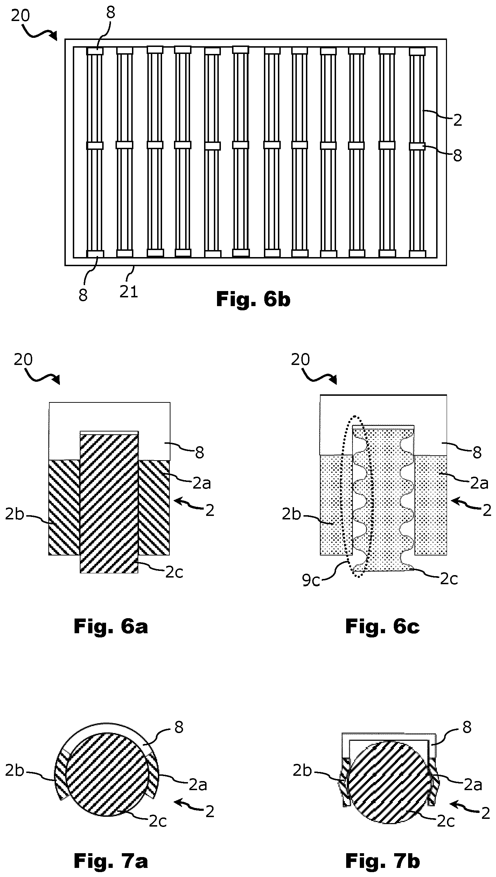

Fig. 6a und 6c zeigen wiederum Querschnittsansichten eines Grillgutauflageelementes 2 eines Schräggrillrostes 20, der beispielsweise aus Gusseisen, gewalzten oder stranggepressten Blechen oder Profilen gefertigt sein kann. Ein Grillgutauflageelement 2 kann drei rechteckige Leisten als Trägerstäbe aufweisen. Der mittlere Trägerstab 2c ist höher als die zwei seitlichen Trägerstäbe 2a und 2b. Durch Querriegel 8 werden die drei Trägerstäbe zusammengehalten, sodass der geringe Abstand zwischen den Trägerstäben auch bei dünner Materialstärke gewährleistet bleibt. Alternativ können die Trägerstäbe auch durch Stifte oder Bolzen verbunden werden. Alle Trägerstäbe können dann in den Grillrostrahmen 21 lösbar eingesetzt werden. Wie in Fig. 5c dargestellt, kann der mittlere Trägerstab 2c Rillen mit einer Tiefe von zwischen 10 µm und 2 mm aufweisen, die an den Trägerstäben 2a und 2b nächstliegenden Seitenflächen eingebracht sind. Dadurch kann durch stärkeren Kapillareffekt mehr Flüssigkeit bzw. Fett abtransportiert werden. Alternativ kann die Oberflächenrauigkeit vergrößert werden, oder Vertiefungsmuster in die Seitenfläche des Trägerstabes 2c eingebracht werden. Die Rillen, Muster, Vertiefungen oder große Rauigkeit können z.B. durch Gießen, Walzen, Pressen, Strangpressen, Ziehen, Blechformen, Schleifen oder Sandstrahlen usw. realisiert werden. Die Trägerstäbe 2a und 2b können zum Beispiel durch Umformen einer Blechleiste oder Gießen gebildet werden. Alternative können auch 2a und 2b Rillen oder Muster aufweisen. Der Trägerstab 2c kann glatt sein oder Rillen oder Muster aufweisen.

Fig. 6b illustriert eine Draufsicht auf den Schräggrillrost 20 mit den Grillgutauflageelementen 2 der Fig. 6a oder 6c. Der Grillrostrahmen 21 kann in diesem Fall rechteckig sein und an den Längsseiten des Grillrostrahmens 21 können die jeweiligen Grillgutauflageelemente 2 bzw. Trägerstäbe 2a, 2b, 2c lösbar eingesetzt werden. Der Querriegel 8 in Fig. 6b verbindet 2a und 2b in einem Auflageelement. Die Trägerstäbe 2a, 2b sowie der Querriegel 8 in einem Auflageelement können aus einem Stück Blech gefertigt werden. Es kann alternativ auch möglich sein, den Querriegel 8als ein U-förmiges Metallstück durch Schweißen mit den Trägerstäben 2a und 2b zu verbinden. Der Trägerstab 2c wird zwischen die Trägerstäbe 2a und 2b eingesteckt. Die Anzahl der Querriegel 8 ist in Fig. 6b beispielhaft mit drei Reihen angegeben. Die Querriegel 8 einer Reihe kann auch einen ganzen durchgängigen Querriegel 8 bilden. Selbstverständlich kann die Anzahl der Querriegel/Querverbindungsreihen auch von drei abweichen, je nach Größe des Schräggrillrostes 20 und der gewünschten Biegestabilität der Grillgutauflageelemente 2.

Fig. 6d zeigt eine Draufsicht eines Schräggrillrostes 20 mit drei rechteckigen Leisten. Anstelle von Rahmen wird hier der Schräggrillrost durch Querriegel 8, die z.B. Bolzen sein können, und Abstandhalter 158 zusammengehalten. Jeder Trägerstab 2a, 2b und 2c besitzt zwei Bohrungen, durch die die Querriegel 8 eingefädelt werden. Der Durchmesser der Bolzen kann kleiner sein als die Bohrungsdurchmesser in den Trägerstäben 2a, 2b und 2c, sodass sich die Trägerstäbe 2a, 2b und 2c bei ungleichmäßiger Hitze frei ausdehnen können. Ein derartiger Schräggrillrost kann in einen Grillwagen mit verstellbarer Rosthöhe eingesetzt werden, wobei ein Querriegel 8 in einen Einschnitt einer Höhe des Grillwagens und der andere Querriegel 8 in anderen Einschnitt anderer Höhe eingelegt werden kann. Die Neigung des Schräggrillrostes wird durch den Höhenunterschied der beiden Einschnitte definiert.

Fig. 7a und 7b zeigen wiederum Querschnittsansichten eines Grillgutauflageelementes 2 eines Schräggrillrostes 20. Ein Auflageelement besteht aus einem Trägerstab 2c im Rundstab und zwei seitlichen Trägerstäben 2a und 2b im gekrümmten Polygonalleistenprofil. Durch eine Mehrzahl von Querverbindungen oder Querriegeln 8 werden die drei Trägerstäbe 2a, 2b und 2c zusammengehalten. Die Polygonalleistenprofile der Trägerstäbe 2a und 2b können dabei beispielsweise rohrförmig oder U-förmig sein. Durch die optionalen Wellen an den Kontaktflächen zwischen mittlerem Trägerstab 2c und den seitlichen Trägerstäben 2a, 2b kann der Kapillareffekt in vorteilhafter Weise verstärkt werden, wodurch mehr Flüssigkeit bzw. Fett abtransportiert werden kann. Die Trägerstäbe 2a, 2b können beispielsweise aus einem Rohr gefertigt werden. Zur weiteren Stabilisierung der Grillgutauflageelemente 2 können sowohl oben als auch unten Querriegel 8 oder Querverbindung eingezogen werden.

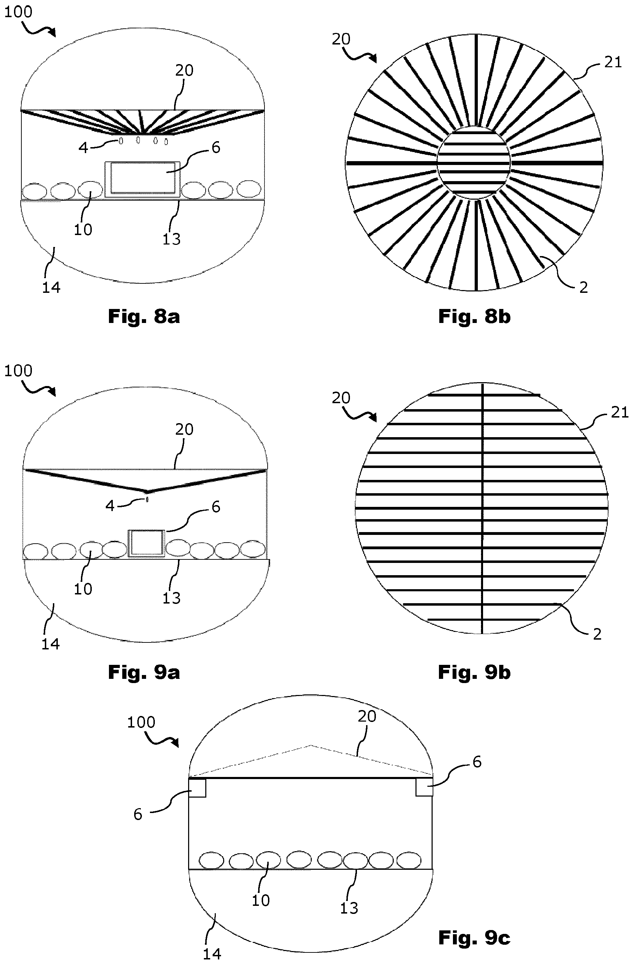

Fig. 8a zeigt einen Querschnitt einer Seitenansicht eines Kugelgrills als Trockengargerät 100 mit einem Garraum 14. Der Garraum 14 kann über einen Deckel geschlossen werden, aber auch gegenüber der Umgebung offen sein, wenn der Deckel geöffnet bleibt oder ein Grill ohne Deckel gebaut wird. Der Kugelgrill weist einen trichterförmigen Schräggrillrost 20 und eine zentrale Schale als Fettauffangbehälter 6 auf, in das Fett 4 von der tiefsten Stelle des trichterförmigen Schräggrillrostes 20 abtropft. Der Schräggrillrost 20 der Fig. 8a hat einen kreisförmigen Grillrostrahmen 21, so dass die in Abstand zueinander stehenden Grillgutauflageelemente 2 entlang ihrer Längserstreckung radial von dem Umfang des Grillrostrahmens 21 zu einem Mittelpunkt des Grillrostrahmens 21 verlaufen, wie in Fig. 8b veranschaulicht. Im Zentrum weist der Grillrostrahmen 21 einen inneren Ring auf, an dessen Umfang die Grillgutauflageelemente 2 enden. Im Inneren des inneren Rings kann ein flacher Grillgutauflagebereich, beispielsweise mit herkömmlichem Grillrost aus einfachen, parallel verlaufenden Rundstäben, gebildet werden. In diesem flachen Grillgutauflagebereich im Zentrum des Schräggrillrostes 20 kann Gargut 1 unter indirekter Hitzeeinstrahlung gegrillt werden. Auf einem Boden 13 im Garraum 14 können beispielsweise glühende Holzkohlen 10 als unterseitige Hitzequelle liegen. Der Schräggrillrost 20 kann mehrteilig gebaut werden, um die Reinigung mit einem Geschirrspüler und/oder um Zugabe von Holzkohle während des Grillens zu ermöglichen.

Fig. 9a zeigt einen Querschnitt einer Seitenansicht eines Kugelgrills als Trockengargerät 100 mit einem Garraum 14. Der Garraum 14 kann über einen Deckel geschlossen werden, aber auch gegenüber der Umgebung offen sein, wenn der Deckel geöffnet bleibt oder ein Grill ohne Deckel gebaut wird. Der Kugelgrill hat einen V-förmigen Schräggrillrost 20 im Garraum und einen zentralen, länglichen Fettauffangbehälter 6 unterhalb des tiefsten Punktes des Schräggrillrostes 20, in den ablaufendes Fett 4 aus dem Gargut abtropfen kann. Wie in Fig. 9b zu erkennen ist, verlaufen die in Abstand zueinander stehenden Grillgutauflageelemente 2 entlang ihrer Längserstreckung innerhalb des (hier kreisförmigen) Grillrostrahmens 21 parallel zueinander. Dabei sind die Grillgutauflageelemente 2 gegenüber der Horizontalen und jeweils von beiden Rändern des Grillrostrahmens 21 zur Mitte hin schräg. Der zentrale Fettauffangbehälter 6, der den ganzen Holzkohlerostkreis teilt, kann verhältnismäßig schmal sein, so dass im Wesentlichen sämtliches Gargut, welches auf dem Schräggrillrost 20 aufliegt, unter direkter Hitzeeinstrahlung von den auf einem Boden 13 im Garraum 14 liegenden glühende Holzkohlen 10 gegrillt werden kann. Der Schräggrillrost 20 kann mehrteilig gebaut werden um die Reinigung mit einem Geschirrspüler und/oder um Zugabe von Holzkohle während des Grillens zu ermöglichen.

Wie in Fig. 9c beispielhaft illustriert, kann die Lage des V-förmigen Schräggrillrostes 20 in einem Garraum 14 eines Kugelgrills als Trockengargerät 100 auch invertiert werden: Dann verlaufen die in Abstand zueinander stehenden Grillgutauflageelemente 2 entlang ihrer Längserstreckung innerhalb des (hier kreisförmigen) Grillrostrahmens 21 ebenfalls parallel zueinander, aber gegenüber der Horizontalen und jeweils von der Mitte des Grillrostrahmens 21 hin zu den beiden Rändern des Grillrostrahmens 21 schräg nach unten. Dadurch können zwei seitliche, beispielsweise bogenförmige Fettauffangbehälter 6 am Rand des Garraums 14 vorgesehen werden. Dies ist vorteilhaft, da das abgetropfte Fett am Rande des Garraums 14 schneller abkühlt und die gesamte Bodenfläche des Bodens 13 mit glühenden Holzkohlen 10 bedeckt werden kann, um eine gleichmäßigere Hitzeverteilung über die gesamte Grillgutauflagefläche zu erzielen. Der Schräggrillrost 20 kann mehrteilig gebaut werden, um die Reinigung mit einem Geschirrspüler und/oder um Zugabe von Holzkohle während des Grillens zu ermöglichen.

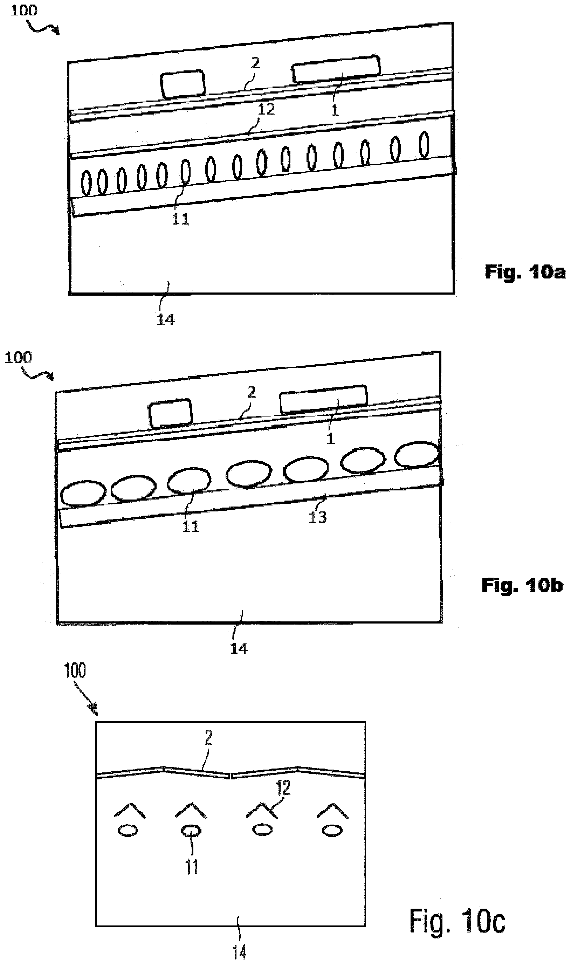

Die Fig. 10a, 10b und 10c zeigen jeweils Querschnitte der Seitenansicht verschiedener Trockengargeräte. Fig. 10a zeigt einen Gasgrill als Trockengargerät 100 mit einem Schräggrillrost 20, welcher beispielsweise wie in Fig. 5b oder 6b ausgebildet sein kann. Der Gasgrill weist einen Garraum mit Gasbrennern 11 und zugehörigen Flammenabdeckungen 12 auf, die jeweils parallel zu den geneigten Grillgutauflageelementen 2 verlaufen. Durch diese Bauweise wird eine möglichst gleichmäßige Hitzeverteilung über die gesamte Grillgutauflagefläche des Schräggrillrostes 20 erzielt. Fig. 10b zeigt in analoger Weise einen Holzkohlegrill als Trockengargerät 100 mit einem Schräggrillrost 20 und schrägem Holzkohlerost mit Boden 13, auf dem Holzkohle 10 aufliegt. Fig. 10c schließlich zeigt einen Gasgrill als Trockengargerät 100 mit dachförmigen Schräggrillrosten 20. Zwei dachförmige, das heißt invertierte V-förmige, Schräggrillroste 20 mit geneigten Grillgutauflageelementen 2 befinden sich oberhalb von Gasbrennern 11 und Flammenabdeckungen 12. Die Grillrostrahmen der zwei Schräggrillroste 20 können an einem Punkt zusammenstoßen, an dem sich Lücken zwischen benachbarten Flammenabdeckungen 12 befinden. So kann der Höhenunterschied zwischen den verschiedenen Längsenden der schräg verlaufenden Grillgutauflageelemente 2 bei gleichbleibender Grillbreite halbiert werden, wodurch die Hitzeverteilung noch gleichmäßiger wird. Abtropfendes Fett tropft durch die Lücke zwischen zwei Flammenabdeckung 12 und kann beispielsweise auf einem Zwischenblech, das sich unterhalb der Gasbrenner 11 befindet, aufgefangen und zu einem Fettauffangbehälter weitergeleitet werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Schräggrillrost (20), umfassend:
eine Anzahl von in Abstand zueinander stehenden Grillgutauflageelementen (2),
wobei mindestens 70% der Grillgutauflageelemente (2) jeweils aus mindestens zwei Trägerstäben (2a; 2b; 2c; 2d), die keine Fettrinnen aufweisen, zusammengesetzt sind,
**dadurch gekennzeichnet, dass** bei jedem der mindestens 70% der Grillgutauflageelemente (2) ein Trägerstab (2a; 2b; 2c; 2d) um weniger als 1 mm von einem der anderen Trägerstäbe (2a; 2b; 2c; 2d) des jeweiligen Grillgutauflageelements (2) beabstandet ist, und
dass die mindestens zwei Trägerstäbe (2a; 2b; 2c; 2d) eines Grillgutauflageelements (2) im Grillbetrieb des Schräggrillrosts (20) unter Neigungswinkeln zwischen 1° und 30° entlang ihrer Längserstreckung gegenüber der Horizontalen verlaufen.

2. Schräggrillrost (20) gemäß Anspruch 1, wobei jeweils mindestens einer der Trägerstäbe (2a; 2b; 2c; 2d) der Grillgutauflageelemente (2) einen Rundstab und mindestens jeweils einer der Trägerstäbe (2a; 2b; 2c; 2d) der Grillgutauflageelemente (2) ein nicht rundes Profil aufweist.

3. Schräggrillrost (20) gemäß Anspruch 1, wobei alle der Trägerstäbe (2a; 2b; 2c; 2d) der Grillgutauflageelemente (2) ein nicht rundes Profil, insbesondere ein Rechtecks- oder Trapezleistenprofil, aufweisen.

4. Schräggrillrost (20) gemäß Anspruch 1, wobei alle der Trägerstäbe (2a; 2b; 2c; 2d) der Grillgutauflageelemente (2) einen Rundstab aufweisen.

5. Schräggrillrost (20) gemäß einem der Ansprüche 1 bis 4, wobei die mindestens 70% der Grillgutauflageelemente (2) jeweils aus mindestens drei Trägerstäben (2a; 2b; 2c; 2d) zusammengesetzt sind, und wobei bei jedem der mindestens 70% der Grillgutauflageelemente (2) ein Trägerstab (2a; 2b; 2c; 2d) um weniger als 1 mm von mindestens zwei der anderen Trägerstäbe (2a; 2b; 2c; 2d) des jeweiligen Grillgutauflageelements (2) beabstandet ist, und wobei die mindestens drei Trägerstäbe (2a; 2b; 2c; 2d) eines Grillgutauflageelements (2) im Grillbetrieb des Schräggrillrosts (20) unter Neigungswinkeln zwischen 1° und 30° entlang ihrer Längserstreckung gegenüber der Horizontalen verlaufen.

6. Schräggrillrost (20) gemäß einem der Ansprüche 1 bis 5, wobei jeweils mindestens einer der Trägerstäbe (2a; 2b; 2c; 2d) der Grillgutauflageelemente (2) senkrecht gegenüber der durch die Grillgutauflageelemente (2) gebildete Grillgutauflageebene um einen Tiefenabstand versetzt angeordnet ist.

7. Schräggrillrost (20) gemäß einem der Ansprüche 1 bis 6, wobei zumindest zwei Trägerstäbe (2a; 2b; 2c; 2d) in einem Grillgutauflageelement (2) in Längsrichtung mehrfach stellenweise verbunden sind.

8. Schräggrillrost (20) gemäß einem der Ansprüche 1 bis 7, wobei jeweils mindestens einer der Trägerstäbe (2a; 2b; 2c; 2d) der Grillgutauflageelemente (2) mindestens an einer einem der jeweils anderen Trägerstäbe (2a; 2b; 2c; 2d) nächstliegenden Seitenfläche Vertiefungen, bevorzugt entlang der Staberstreckungsrichtung, aufweist.

9. Schräggrillrost (20) gemäß Anspruch 8, wobei die Vertiefungen eine Tiefe zwischen 10 µm und 2 mm aufweisen.

10. Schräggrillrost (20) gemäß einem der Ansprüche 1 bis 9, wobei mindestens einer der Trägerstäbe (2a; 2b; 2c; 2d) der Grillgutauflageelemente (2) andere Querschnittsdimensionen aufweist als die anderen Trägerstäbe (2a; 2b; 2c; 2d).

11. Schräggrillrost (20) gemäß einem der Ansprüche 1 bis 10, wobei die in Abstand zueinander stehenden Grillgutauflageelemente (2) entlang ihrer Längserstreckung parallel zueinander verlaufen.

12. Schräggrillrost (20) gemäß einem der Ansprüche 1 bis 10, wobei der Schräggrillrost kreisförmig ist und die in Abstand zueinander stehenden Grillgutauflageelemente (2) entlang ihrer Längserstreckung radial von dem Umfang des Schräggrillrostes (20) zu einem Mittelpunkt verlaufen.

13. Schräggrillrost (20) gemäß einem der Ansprüche 1 bis 12, wobei die Trägerstäbe der in Abstand zueinander stehenden Grillgutauflageelemente (2) entlang ihrer Längserstreckung gegenüber einem Grillrostrahmen (21) oder den Querriegeln (8) verschiebbar mit dem Grillrostrahmen (21) oder den Querriegeln (8) verbunden sind.

14. Trockengargerät (100), insbesondere Backofen, Kugelgrill, Rundgrill, Säulengrill, Trichtergrill, Schwenkgrill, Gartengrill, Grillwagen, Grillstation oder Grillkamin, umfassend:
einen Garraum (14); und
mindestens einem in dem Garraum (14) angeordneten Schräggrillrost (20) gemäß einem der Ansprüche 1 bis 13.

15. Trockengargerät (100) gemäß Anspruch 14, weiterhin umfassend:
mindestens einen Fettauffangbehälter (6), welcher unter der gegenüber der Horizontalen tiefsten Stelle des Schräggrillrosts (20) innerhalb des Garraums (14) angeordnet ist.

16. Trockengargerät (100) gemäß Anspruch 14 oder 15, wobei der Garraum (14) ein kreisförmiges Querschnittsprofil aufweist und der Schräggrillrost (20) gemäß Anspruch 12 ausgestaltet ist.

17. Trockengargerät (100) gemäß einem der Ansprüche 14 bis 16, weiterhin mit einer Hitzequelle, deren Hitze erzeugende Elemente (10; 11) im Wesentlichen in konstantem Abstand zu den Grillgutauflageelementen (2) des Schräggrillrosts (20) im Garraum (14) angeordnet sind.

## Claims

1. A sloping grillage (20), comprising:
a number of grill food support elements (2) spaced apart with a distance from each other,
wherein at least 70% of the grill food support elements ( 2) are each composed of at least two support bars (2a; 2b; 2c; 2d) that do not have fat channels,
**characterized in that** for each of the at least 70% of the grill food support elements (2) one support bar (2a; 2b; 2c; 2d) is spaced less than 1 mm from at least one of the other support bars (2a; 2b; 2c; 2d), and
**in that** the at least two support bars (2a; 2b; 2c; 2d) of a grill food support element (2) run at inclination angles between 1° and 30° relative to the horizontal along their longitudinal extension during grill operation of the sloping grillage (20).

2. The sloping grillage (20) of claim 1, wherein at least one of the support bars (2a; 2b; 2c; 2d) of the grill food support elements (2) is a round bar and at least one of the support bars (2a; 2b; 2c; 2d) of the grill food support elements (2) has a non-round profile.

3. The sloping grillage (20) of claim 1, wherein all of the support bars (2a; 2b; 2c; 2d) of the grill food support elements (2) have a non-round profile, in particular a rectangular or trapezoidal strip profile.

4. The sloping grillage (20) of claim 1, wherein all of the support bars (2a; 2b; 2c; 2d) of the grill food support elements (2) have a round bar.

5. The sloping grillage (20) of one of the claims 1 to 4, wherein the at least 70% of the grill food support elements (2) are each composed of at least three support bars (2a; 2b; 2c; 2d), and wherein for each of the at least 70% of the grill food support elements (2) one support bar (2a; 2b; 2c; 2d) is spaced less than 1 mm from at least two of the other support bars (2a; 2b; 2c; 2d), and wherein the at least three support bars (2a; 2b; 2c; 2d) of a grill food support element (2) run at inclination angles between 1° and 30° relative to the horizontal along their longitudinal extension during grill operation of the sloping grillage (20).

6. The sloping grillage (20) of one of the claims 1 to 5, wherein at least one of the support bars (2a; 2b; 2c; 2d) of the grill food support elements (2) is arranged offset by a depth distance perpendicular to the grill food support plane formed by the grill food support elements (2) .

7. The sloping grillage (20) of one of the claims 1 to 6, wherein at least two support bars (2a; 2b; 2c; 2d) in a grill food support element (2) are connected in multiple places in the longitudinal direction.

8. The sloping grillage (20) of one of the claims 1 to 7, wherein at least one of the support bars (2a; 2b; 2c; 2d) of the grill food support elements (2) has depressions, preferably along the bar extension direction, on at least one side surface closest to one of the other support bars (2a; 2b; 2c; 2d).

9. The sloping grillage (20) of claim 8, wherein the depressions have a depth between 10 µm and 2 mm.

10. The sloping grillage (20) of one of the claims 1 to 9, wherein at least one of the support bars (2a; 2b; 2c; 2d) of the grill food support elements (2) has different cross-sectional dimensions than the other support bars (2a; 2b; 2c; 2d).

11. The sloping grillage (20) of one of the claims 1 to 10, wherein the grill food support elements (2) spaced apart from each other run parallel to each other along their longitudinal extension.

12. The sloping grillage (20) of one of the claims 1 to 10, wherein the sloping grillage is circular and the grill food support elements (2) spaced apart from each other run radially from the circumference of the sloping grillage (20) to a center along their longitudinal extension.

13. The sloping grillage (20) of one of the claims 1 to 12, wherein the support bars of the grill food support elements (2) spaced apart from each other along their longitudinal extension are connected to the grillage frame (21) or the crossbars (8) in a displaceable manner relative to a grillage frame (21) or the crossbars (8).

14. A dry cooking device (100), in particular oven, kettle grill, round grill, column grill, funnel grill, swing grill, garden grill, grill cart, grill station or grill fireplace, comprising:
a cooking chamber (14); and
at least one sloping grillage (20) arranged in the cooking chamber (14) according to one of claims 1 to 13.

15. The dry cooking device (100) of claim 14, further comprising:
at least one fat collecting container (6), which is arranged within the cooking chamber (14) below the lowest point relative to the horizontal of the sloping grillage (20) .

16. The dry cooking device (100) of claim 14 or 15, wherein the cooking chamber (14) has a circular cross-sectional profile and the sloping grillage (20) is designed according to claim 12.

17. The dry cooking device (100) of one of the claims 14 to 16, further comprising a heat source the heat-generating elements (10; 11) of which are arranged substantially at a constant distance from the grill food support elements (2) of the sloping grillage (20) in the cooking chamber (14).

## Revendications

1. Grille de gril inclinée (20), comprenant :
un certain nombre d'éléments de support d'article à griller (2) espacés les uns des autres,
dans laquelle au moins 70 % des éléments de support d'article à griller (2) sont respectivement assemblés à partir de deux barres porteuses (2a ; 2b ; 2c ; 2d) qui ne présentent pas de gorge d'écoulement de graisse,
**caractérisée en ce que**, pour chacun des au moins 70 % des éléments de support d'article à griller (2), une barre porteuse (2a ; 2b ; 2c ; 2d) est espacée de moins de 1 mm de l'une des autres barres porteuses (2a ; 2b ; 2c ; 2d) de l'élément de support d'article à griller (2) respectif, et
**en ce que** les au moins deux barres porteuses (2a ; 2b ; 2c ; 2d) d'un élément de support d'article à griller (2) s'étendent, lorsque la grille de gril inclinée (20) est en fonctionnement, en formant des angles d'inclinaison compris entre 1° et 30° le long de leur étendue longitudinale par rapport à l'horizontale.

2. Grille de gril inclinée (20) selon la revendication 1, dans laquelle respectivement au moins une des barres porteuses (2a ; 2b ; 2c ; 2d) des éléments de support d'article à griller (2) présente une barre ronde et au moins respectivement une des barres porteuses (2a ; 2b ; 2c ; 2d) des éléments de support d'article à griller (2) présente un profilé non rond.

3. Grille de gril inclinée (20) selon la revendication 1, dans laquelle toutes les barres porteuses (2a ; 2b ; 2c ; 2d) des éléments de support d'article à griller (2) présentent un profilé non rond, en particulier une baguette profilée rectangulaire ou trapézoïdale.

4. Grille de gril inclinée (20) selon la revendication 1, dans laquelle toutes les barres porteuses (2a ; 2b ; 2c ; 2d) des éléments de support d'article à griller (2) présentent une barre ronde.

5. Grille de gril inclinée (20) selon l'une des revendications 1 à 4, dans laquelle les au moins 70 % des éléments de support d'article à griller (2) sont respectivement assemblés à partir d'au moins trois barres porteuses (2a ; 2b ; 2c ; 2d) et dans laquelle, pour chacun des au moins 70 % des éléments de support d'article à griller (2), une barre porteuse (2a ; 2b ; 2c ; 2d) est espacée de moins de 1 mm d'au moins deux des autres barres porteuses (2a ; 2b ; 2c ; 2d) de l'élément de support d'article à griller (2) respectif, et dans laquelle les au moins trois barres porteuses (2a ; 2b ; 2c ; 2d) d'un élément de support d'article à griller (2) s'étendent, lorsque la grille de gril inclinée (20) est en fonctionnement, en formant des angles d'inclinaison compris entre 1° et 30° le long de leur étendue longitudinale par rapport à l'horizontale.

6. Grille de gril inclinée (20) selon l'une des revendications 1 à 5, dans laquelle respectivement au moins une des barres porteuses (2a ; 2b ; 2c ; 2d) des éléments de support d'article à griller (2) est disposée décalée d'une distance en profondeur perpendiculairement par rapport au plan de support d'article à griller formé par les éléments de support d'article à griller (2).

7. Grille de gril inclinée (20) selon l'une des revendications 1 à 6, dans laquelle au moins deux barres porteuses (2a ; 2b ; 2c ; 2d) d'un élément de support d'article à griller (2) sont reliées en plusieurs endroits dans la direction longitudinale.

8. Grille de gril inclinée (20) selon l'une des revendications 1 à 7, dans laquelle respectivement au moins une des barres porteuses (2a ; 2b ; 2c ; 2d) des éléments de support d'article à griller (2) présente, au moins sur une surface latérale la plus proche de l'une des autres barres porteuses (2a ; 2b ; 2c ; 2d) respectives, des creux, de préférence dans la direction longitudinale de la barre.

9. Grille de gril inclinée (20) selon la revendication 8, dans laquelle les creux présentent une profondeur comprise entre 10 µm et 2 mm.

10. Grille de gril inclinée (20) selon l'une des revendications 1 à 9, dans laquelle au moins une des barres porteuses (2a ; 2b ; 2c ; 2d) des éléments de support d'article à griller (2) présente d'autres dimensions de coupe transversale par rapport aux autres barres porteuses (2a ; 2b ; 2c ; 2d).

11. Grille de gril inclinée (20) selon l'une des revendications 1 à 10, dans laquelle les éléments de support d'article à griller (2) espacés les uns des autres s'étendent parallèlement les uns aux autres le long de leur étendue longitudinale.

12. Grille de gril inclinée (20) selon l'une des revendications 1 à 10, la grille de gril inclinée étant de forme circulaire et les éléments de support d'article à griller (2) espacés les uns des autres s'étendant le long de leur étendue longitudinale radialement depuis la périphérie de la grille de gril inclinée (20) jusqu'à un centre.

13. Grille de gril inclinée (20) selon l'une des revendications 1 à 12, dans laquelle les barres porteuses des éléments de support d'article à griller (2) espacés les uns des autres sont reliées, de manière déplaçable le long de leur étendue longitudinale par rapport à un cadre de grille de gril (21) ou aux traverses (8), au cadre de grille de gril (21) ou aux traverses (8).

14. Appareil de cuisson à sec (100), en particulier four, gril sphérique, gril rond, gril à colonne, gril à entonnoir, gril suspendu, gril de plein air, gril sur roulettes, station de gril ou gril à cheminée, comprenant :
un espace de cuisson (14) ; et
au moins une grille de gril inclinée (20) selon l'une des revendications 1 à 13, disposée dans l'espace de cuisson (14) .

15. Appareil de cuisson à sec (100) selon la revendication 14, comprenant en outre :
au moins un récipient de récupération de graisse (6) qui est disposé à l'intérieur de l'espace de cuisson (14) sous l'endroit le plus bas de la grille de gril inclinée (20) par rapport à l'horizontale.

16. Appareil de cuisson à sec (100) selon la revendication 14 ou 15, dans laquelle l'espace de cuisson (14) présente un profil de coupe transversale circulaire et la grille de gril inclinée (20) est exécutée selon la revendication 12.

17. Appareil de cuisson à sec (100) selon l'une des revendications 14 à 16, comportant en outre une source de chaleur dont les éléments (10 ; 11) générant la chaleur sont disposés dans l'espace de cuisson (14), sensiblement à une distance constante par rapport aux élément de support d'article à griller (2) de la grille de gril inclinée (20).
